# EUROPÄISCHE PATENTANMELDUNG

(11) **EP 4 624 921 A1**
(43) Veröffentlichungstag der Anmeldung: **01.10.2025**
(21) Anmeldenummer: 25165885.2
(22) Anmeldetag: 25.03.2025
(51) Int. Cl.: G01N 30/36, B01D 15/40

(54) **CHROMATOGRAPHIE-ANLAGE MIT FLUID-RÜCKGEWINNUNG**

(30) Priorität: 28.03.2024 DE 102024108921
(71) Anmelder: Bozic, Alexander, 61440 Oberursel (DE)
(72) Erfinder: Bozic, Alexander, 61440 Oberursel (DE)
(74) Vertreter: Schultheiss & Sterzel Patentanwälte PartG mbB

(57) **Zusammenfassung**

Die vorliegende Erfindung beschreibt eine Chromatographie-Anlage mit Fluid-Rückgewinnung umfassend eine erste Pumpe, die mit einem Flüssigkeitsreservoir für ein erstes Fluid verbindbar oder verbunden ist, und eine zweite Pumpe, die mit einem Flüssigkeitsreservoir für ein zweites Fluid verbindbar oder verbunden ist, wobei eine Pumpenauslassleitung der ersten Pumpe und eine Pumpenauslassleitung der zweiten Pumpe mit einem Verbindungsstück verbunden sind und in Flussrichtung gesehen nach diesem Verbindungsstück eine über eine Verbindungsleitung mit dem Verbindungsstück verbundene Chromatographiesäule, nachfolgend ein erster Rückdruckregler und anschließend ein Gas-Flüssig-Abscheider vorgesehen ist, wobei der Gas-Flüssig-Abscheider einen Flüssigauslass und einen Gasauslass aufweist, wobei der Gasauslass des Gas-Flüssig-Abscheiders mit einer Gasrückgewinnungsvorrichtung verbunden ist, wobei der Gas-Flüssig-Abscheider einen Abscheidebereich mit einer Einlassdüse, einer Pralleinheit und einer Gasleiteinheit umfasst, sowie einen Trennbereich mit einem Flüssigauslass und einen Gasausleitbereich mit einem Gasauslass umfasst, wobei der Abscheidebereich mit dem Trennbereich über eine Abscheideöffnung verbunden ist und die Einlassdüse so ausgestaltet ist, dass ein durch die Einlassdüse geleiteter Gas-Flüssigstrom gegen die Pralleinheit beaufschlagbar ist und nach dem Flüssigauslass des Gas-Flüssig-Abscheider ein steuerbares Auslassventil angeordnet ist. .

## Beschreibung

Die vorliegende Erfindung betrifft eine Chromatographie-Anlage mit Fluid-Rückgewinnung sowie ein Chromatographie-Verfahren.

Durch eine überkritische Flüssigkeitschromatographie (SFC, Supercritical Fluid Chromatography) können viele Vorteile erzielt werden, so dass verschiedene Substanzen besonders einfach und zuverlässig getrennt, chemisch analysiert, identifiziert und quantifiziert werden können.

Vielfach wird als Fluid zur Durchführung einer überkritischen Flüssigkeitschromatographie CO₂ oder ein CO₂-Gemisch eingesetzt, wobei dieses Gas nach dem Trennvorgang in die Umwelt freigesetzt wird.

Diese Freisetzung ist aus vielerlei Hinsicht unerwünscht. Zunächst ist CO₂ als Treibhausgas bekannt, so dass als Umweltschutzgründen eine Freisetzung unerwünscht ist. Ferner steht das in die Umwelt freigesetzte CO₂ für keine weitere Auftrennung zur Verfügung, sondern muss durch neu bereitgestelltes CO₂ ersetzt werden. Dieses muss transportiert werden, so dass hierdurch Energie benötigt wird, die im Allgemeinen mit weiterer CO₂-Freisetzung verknüpft ist.

Aus diesen Gründen wurde bei Verfahren, bei denen CO₂ in einem überkritischen Zustand eingesetzt wird, ein CO₂-Recycling vorgeschlagen. Beispielsweise beschreiben die Druckschriften US 2009/206037A1, EP 1917082 B1 und EP 0254610 A1 Trennverfahren, bei denen eine CO₂-Rückgewinnung erfolgt.

Die bekannten CO₂-Rückgewinnungsverfahren werden seit längerem eingesetzt, wobei entsprechende Anlagen kommerziell erhältlich sind. Es ist jedoch ein allgemeines Bestreben, die Eigenschaften dieser Anlagen und Verfahren zu verbessern.

So besteht insbesondere ein Interesse daran die Reinheit der aufgetrennten bzw. aufgereinigten Substanzen zu erhöhen. Ferner sollte der durch die Aufreinigung verursachte Verlust an zu trennenden oder aufzureinigenden Substanzen möglichst gering sein. Darüber hinaus sollte die Chromatographie-Anlage sehr flexibel einsetzbar sein, so dass möglichst viele unterschiedliche Zusammensetzungen ohne aufwendige Maßnahmen aufgetrennt werden können.

In Anbetracht des Standes der Technik ist es daher Aufgabe der vorliegenden Erfindung, eine Chromatographie-Anlage bereitzustellen, die die zuvor dargelegten Probleme löst. Insbesondere sollte die Anlage zu besonders reinen Produkten führen, die mit einer hohen Ausbeute gewonnen werden. Ferner sollte die Anlage einen hohen Durchsatz aufweisen, wobei in einer zügigen Folge verschiedene Proben aufgetragen und aufgereinigt werden können, ohne dass aufwendige Reinigungszyklen der Chromatographie-Anlagen notwendig wären.

Insbesondere sollten Nebenprodukte, die durch eine Chromatographie abgetrennt werden, nicht oder nur in einem geringen Maß im CO₂-Kreislauf mitgeführt und bei einer Chromatographie über das CO₂ auf die Säule aufgetragen werden.

Eine weitere Aufgabe besteht darin eine Chromatographie-Anlage bereitzustellen, die besonders kostengünstig und wartungsarm betrieben und hergestellt werden kann.

Hierbei sollte die Anlage möglichst einfach und kostengünstig betreibbar sein und zu weiteren Kosten- und Handhabbarkeitsvorteilen führen. Insbesondere sollte der Energiebedarf, die zur Rückgewinnung eines Fluids aufgewendet werden muss, möglichst geringgehalten werden. Ferner sollte der Energiebedarf zur Bereitstellung von CO₂ möglichst minimiert werden. Hier ist auszuführen, dass stationäre Anlagen zur Bereitstellung von CO₂, insbesondere große CO₂-Tanks mit hohen Investitionskosten verbunden sind. Die Bereitstellung von CO₂ über kleinere Behälter, insbesondere Gasflaschen, die auch gebündelt geliefert werden, führt zu einem großen Transportgewicht, da nicht nur das CO₂, sondern auch die Behälter als solche vom Lieferanten zum Abnehmer zu überführen sind. Ein hohes Gewicht bedeutet jedoch einen hohen Kraftstoffverbrauch der LKWs mit denen das CO₂ transportiert wird.

Ferner sollte die Chromatographie-Anlage bezogen auf den Volumenstrom, mit dem diese betrieben wird, möglichst preiswert sein.

Ferner ist die Bereitstellung eines Verfahrens zur Durchführung einer Chromatographie Ziel dieser Erfindung, bei dem eine möglichst hohe Ausbeute an gereinigten Substanzen erzielt werden kann. Hierbei sollten die aufgetrennten Substanzen eine möglichst hohe Reinheit aufweisen. Weiterhin sollte das Verfahren möglichst einfach und kostengünstig durchführbar sein und zu weiteren Kosten- und Handhabbarkeitsvorteilen führen.

Darüber hinaus sollte eine hohe Ausbeute und Reinheit der zu trennenden Substanzen für möglichst unterschiedliche Flüssigkeitsgemische beziehungsweise Gas-Flüssigkeitsgemische erzielbar sein.

Ferner ist eine Aufgabe der vorliegenden Erfindung Komponenten bereitzustellen, die einen möglichst einfachen Umbau einer bekannten SFC-Anlage zu einer SFC-Anlage mit einem Fluid-Recycling, insbesondere einer CO₂-Rückgewinnung ermöglichen.

Gelöst werden diese sowie weitere nicht explizit genannte Aufgaben, die jedoch aus den hierin einleitend diskutierten Zusammenhängen ohne weiteres ableitbar oder erschließbar sind, durch eine Chromatographie-Anlage mit allen Merkmalen des Patentanspruchs 1.

Gegenstand der vorliegenden Erfindung ist dementsprechend eine Chromatographie-Anlage aufweisend eine erste Pumpe, die mit einem Flüssigkeitsreservoir für ein erstes Fluid verbindbar oder verbunden ist, und eine zweite Pumpe, die mit einem Flüssigkeitsreservoir für ein zweites Fluid verbindbar oder verbunden ist, wobei eine Pumpenauslassleitung der ersten Pumpe und eine Pumpenauslassleitung der zweiten Pumpe mit einem Verbindungsstück verbunden sind und in Flussrichtung gesehen nach diesem Verbindungsstück eine über eine Verbindungsleitung mit dem Verbindungsstück verbundene Chromatographiesäule, nachfolgend ein erster Rückdruckregler und anschließend ein Gas-Flüssig-Abscheider vorgesehen ist, wobei der Gas-Flüssig-Abscheider einen Flüssigauslass und einen Gasauslass aufweist, wobei der Gasauslass des Gas-Flüssig-Abscheiders mit einer Gasrückgewinnungsvorrichtung verbunden ist,
die dadurch gekennzeichnet ist, dass
der Gas-Flüssig-Abscheider:
   a) einen Abscheidebereich mit einer Einlassdüse, einer Pralleinheit und einer Gasleiteinheit;
   b) einen Trennbereich mit einem Flüssigauslass und
   c) einen Gasausleitbereich mit einem Gasauslass;
umfasst, wobei der Abscheidebereich mit dem Trennbereich über eine Abscheideöffnung verbunden ist und die Einlassdüse so ausgestaltet ist, dass ein durch die Einlassdüse geleiteter Gas-Flüssigstrom gegen die Pralleinheit beaufschlagbar ist und
nach dem Flüssigauslass des Gas-Flüssig-Abscheider ein steuerbares Auslassventil angeordnet ist.

Durch die vorliegende Erfindung wird insbesondere bewirkt, dass besonders reine Produkte erhalten werden, die mit einer hohen Ausbeute gewonnen werden. Ferner weist die Anlage einen hohen Durchsatz auf, wobei in einer zügigen Folge verschiedene Proben aufgetragen und aufgereinigt werden können, ohne dass aufwendige Zyklen zur Reinigung und/oder zum Äquilibrieren der Chromatographiesäure notwendig wären. Weiterhin kann auf einen Austausch des sich in einer Chromatographie-Anlage mit einer CO₂-Rückgewinnung befindlichen Kohlendioxids im Allgemeinen verzichtet werden, um Nebenprodukte aus früheren Trennungen aus dem Kreislauf zu entfernen.

Weiterhin sind hierdurch auch Verbesserungen bei Chromatographien mit Gradienten möglich, bei denen zu Beginn der Chromatographie weniger Lösungsmittel eingesetzt wird, als Lösungsmittel im eingesetzten und zurückgewonnen CO₂ enthalten ist. Mit anderen Worten, falls der Anteil an Lösungsmittel zu Beginn des Gradienten geringer sein soll als der Anteil an Lösungsmittel im zurückgewonnen CO₂ ist, muss entweder reines CO2 zugegebenen werden, um diesen Anteil entsprechend zu verringern oder das Lösungsmittel muss durch Zusatzmaßnahmen aus dem zurückgewonnen CO₂ abgetrennt werden.

Ferner werden sehr gute Ergebnisse auch bei Chromtographieverfahren erzielt, bei denen die Anlage mit einem Gradienten betrieben wird. Darüber hinaus kann ein SFC-Verfahren auch bei sehr unterschiedlichen Volumenströmen des Aerosols durchgeführt werden, ohne dass die wirtschaftlichen Vorteile stark beeinträchtigt werden würden.

Weiterhin kann der Energiebedarf, der zur Rückgewinnung des Fluids notwendig ist, relativ geringgehalten werden.

Ferner können durch das vorliegende Verfahren sowie die Chromatographie-Anlage zur Durchführung eines Verfahrens, die Komplexität und die Kosten der technischen Ausrüstung reduziert werden, die für die Einrichtung der SFC-Analyse erforderlich ist. Neben konventionellen SFC-Anlagen ohne eine Gasrückgewinnungsanlage können auch HPLC-Anlagen umgebaut werden, die für einen präparativen Einsatz vorgesehen sind.

Die erfindungsgemäße Chromatographie-Anlage umfasst mindestens zwei Pumpen, eine erste Pumpe und eine zweite Pumpe. Die Art der Pumpen ist für die vorliegende Erfindung unerheblich. So können Drehkolbenpumpen, Kreiselpumpen, Zahnradpumpen und Kolbenpumpen eingesetzt werden. Allerdings ermöglicht die Erfindung den Einsatz von kostengünstigen Kolbenpumpen, die vorzugweise mindestens zwei Kolben umfassen können. Bei Kolbenpumpen mit mindestens zwei Kolben können die zwei Kolben über eine Nockenwelle gesteuert werden. Ferner können die zwei Kolben unabhängig voneinander gesteuert werden, wobei die Steuerung über eine Nockenwelle vielfach kostengünstiger ist und für die Zwecke der vorliegenden Erfindung eingesetzt werden kann. Vorzugsweise ist die erste Pumpe und/oder die zweite Pumpe als Kolbenpumpe ausgestaltet ist, wobei der Pumpenkopf bevorzugt kühlbar ist. Die Kühlbarkeit des Pumpenkopfs ist insbesondere bei einer Chromatographie-Anlage zweckmäßig, die als SFC-Anlage ausgestaltet ist.

Die vorliegende Erfindung bewirkt besonders überraschend, dass auch mit kostengünstigen Pumpen hervorragende Trennleistungen erzielbar sind.

Die erste Pumpe ist mit einem Flüssigkeitsreservoir für ein erstes Fluid verbindbar oder verbunden, und eine zweite Pumpe ist mit einem Flüssigkeitsreservoir für ein zweites Fluid verbindbar oder verbunden. Die Art des Flüssigkeitsreservoirs ist nicht in einer besonderen Weise begrenzt, sondern kann nach den spezifischen Anforderungen ausgestaltet werden.

Beispielsweise kann vorgesehen sein, dass dem Flüssigkeitsreservoir für ein zweites Fluid und der zweiten Pumpe eine Kühlung für das Fluid vorgesehen ist. Diese Ausführungsform ist insbesondere bei einer Chromatographie-Anlage zweckmäßig, die als SFC-Anlage ausgestaltet ist. Durch diese Ausführungsform kann sichergestellt werden, dass keine oder nur eine geringe Gasbildung eintritt, wobei dieser Punkt insbesondere bei relativ geringem Druck im Reservoir, bei CO₂ von 70 bar oder weniger, insbesondere 60 bar oder weniger sinnvoll ist.

Die zweite Pumpe kann in einer bevorzugten Ausgestaltung als System zum Pumpen einer kompressiblen Flüssigkeit ausgestaltet sein. Ein bevorzugtes System zum Pumpen einer kompressiblen Flüssigkeit ist aus dem Stand der Technik, beispielsweise der Druckschrift WO 2019/086671 A1 mit der Anmeldenummer PCT/EP2018/080182 mit dem Anmeldedatum 05. November 2018 bekannt, wobei die Offenbarung dieser Druckschrift vollständig durch Referenz hierauf in die vorliegende Anmeldung zu Offenbarungszwecken eingefügt wird.

Die Pumpenauslassleitungen der ersten und der zweiten Pumpe werden in ein Verbindungsstück zusammengeführt und aus diesem Verbindungsstück in eine gemeinsame Auslassleitung ausgeleitet. Nach diesem Verbindungsstück ist in Flussrichtung gesehen eine Chromatographiesäule vorgesehen. Derartige Verbindungsstücke sind als solche bekannt und unterliegen keiner besonderen Begrenzung.

Nach dieser Chromatographiesäule weist die Chromatographie-Anlage in Flussrichtung gesehen einen ersten Rückdruckregler und anschließend einen Gas-Flüssig-Abscheider auf.

Der Gas-Flüssig-Abscheider umfasst:
a) einen Abscheidebereich mit einer Einlassdüse, einer Pralleinheit und einer Gasleiteinheit;
b) einen Trennbereich mit einem Flüssigauslass und
c) einen Gasausleitbereich mit einem Gasauslass,
wobei der Abscheidebereich mit dem Trennbereich über eine Abscheideöffnung verbunden ist und die Einlassdüse so ausgestaltet ist, dass ein durch die Einlassdüse geleiteter Gas-Flüssigstrom gegen die Pralleinheit beaufschlagbar ist. Bevorzugte Ausführungsformen eines erfindungsgemäß einsetzbaren Gas-Flüssig-Abscheiders werden später beschrieben.

Nach dem Flüssigauslass des Gas-Flüssig-Abscheider ist, in Flussrichtung gesehen, ein steuerbares Auslassventil angeordnet. Die Ausgestaltung des steuerbaren Auslassventils kann vom Fachmann in Abhängigkeit der exakten Ausgestaltung der Chromatographie-Anlage und den konkreten Anforderungen an dieselbe vorgenommen werden. Beispielsweise kann das steuerbare Auslassventil als Proportionalventil oder als Rückdruckregler ausgestaltet sein, wobei ein als Rückdruckregler ausgestaltetes steuerbares Auslassventil hierin als zweiten Rückdruckregler bezeichnet wird, um diesen vom ersten Rückdruckregler zu unterscheiden, der vor dem Gas-Flüssig-Abscheider angeordnet ist. Ferner kann das steuerbare Auslassventil auch als Ventil mit zwei Schaltstellungen ausgeführt sein, welches sehr schnell schaltbar ist, um so die Auslassmenge zweckmäßig steuern zu können. Hierbei sind Proportionalventile oder Rückdruckregler bevorzugt und Proportionalventile besonders bevorzugt. Dementsprechend kann vorgesehen sein, dass das steuerbare Auslassventil ein Proportionalventil oder ein Rückdruckregler ist. Das Auslassventil ist steuerbar, wobei diese Steuerung später ausführlicher beschrieben wird. Hierbei soll das steuerbare Auslassventil ein Überlaufen des Gas-Flüssig-Abscheiders oder ein Entweichen von Gas über den Flüssigkeitsauslass des Gas-Flüssig-Abscheiders verhindern.

Vorzugsweise kann vorgesehen sein, dass der Gas-Flüssig-Abscheider einen Sensor zur Bestimmung des Flüssigkeitsstandes im Trennbereich aufweist und/oder ein Sensor zur Bestimmung des Flüssigkeitsgehaltes in der Verbindungsleitung zwischen Gas-Flüssig-Abscheider und dem steuerbaren Auslassventil vorgesehen ist. Geeignete Sensoren zur Bestimmung des Flüssigkeitsstandes umfassen kapazitive Sensoren und/oder optische Sensoren, deren Messwerte jeweils in Abhängigkeit des Füllstandes gemessen werden können. Ferner können Sensoren, beispielsweise Blasenzähler oder Sensoren zur Bestimmung des Brechungsindex, die vor oder nach dem steuerbaren Auslassventil angeordnet sind, vorzugsweise vor dem steuerbaren Auslassventil, verwendet werden, um den Füllstand im Gas-Flüssig-Abscheider abzuschätzen oder den Flüssigkeitsgehalt in der Verbindungsleitung zwischen Gas-Flüssig-Abscheider und dem steuerbaren Auslassventil zu bestimmen. Die zuvor genannten Sensoren sind weithin bekannt und kommerziell erhältlich.

In einer bevorzugten Ausgestaltung ist die Steuerung des steuerbaren Auslassventils als Regelung ausgestaltet, so dass die Steuerung des steuerbaren Auslassventils den Flüssigkeitsstand im Gas-Flüssig-Abscheider auf einen vorgegebenen Wert regeln kann. Insbesondere kann der Durchlass des steuerbaren Auslassventils so geregelt werden, dass der über den Sensor gemessene Flüssigkeitsstand möglichst gering bleibt, jedoch keine wesentlichen Mengen an Gas über den Flüssigauslass des Gas-Flüssig-Abscheider entweicht.

In einer bevorzugten Ausgestaltung kann daher vorgesehen sein, dass die Regelung dergestalt erfolgt, dass die Verbindungsleitung zwischen dem Flüssigauslass des Gas-Flüssig-Abscheiders und dem steuerbaren Auslassventil im Wesentlichen mit Flüssigkeit gefüllt ist, das Volumen an Flüssigkeit im Gas-Flüssig-Abscheider möglichst gering ist.

In diesem Zusammenhang ist festzuhalten, dass die jeweiligen Sensorwerte für den Füllstand an Flüssigkeit im Bereich des Gas-Flüssig-Abscheiders, in der Verbindungsleitung zwischen dem Flüssigauslass des Gas-Flüssig-Abscheiders und dem steuerbaren Auslassventil oder nach dem steuerbaren Auslassventil hierzu geeignet sind.

Vorzugsweise benetzt die Flüssigkeit die Wandung des Gas-Flüssig-Abscheiders und entweicht über den Flüssigauslass des Gas-Flüssig-Abscheiders, ohne dass sich größere Mengen an Flüssigkeit im Gas-Flüssig-Abscheider sammeln. Durch diese Maßnahme kann überraschend die Trennleistung der Chromatographie-Anlage verbessert werden.

Hierbei ist festzuhalten, dass zu Beginn der Chromatographie Gas in der Verbindungsleitung zwischen dem Flüssigauslass des Gas-Flüssig-Abscheiders und dem steuerbaren Auslassventil vorhanden sein kann, welches aufgrund des im Gas-Flüssig-Abscheider beziehungsweise in der Gasrückgewinnungsvorrichtung aufzubauenden Drucks nicht über den Flüssigauslass des Gas-Flüssig-Abscheiders entweichen kann. Dieses Problem kann unter anderem dadurch begegnet werden, dass ein Sensor zur Bestimmung des Flüssigkeitsstandes im Trennbereich des Gas-Flüssig-Abscheiders vorgesehen ist. Ferner kann, falls ein Sensor vor oder nach dem steuerbaren Auslassventil angeordnet ist, der Druck im Gas-Flüssig-Abscheider beziehungsweise in der Gasrückgewinnungsvorrichtung gemessen und zur Steuerung des steuerbaren Auslassventils berücksichtigt werden. Falls ein Sensor vor oder nach dem steuerbaren Auslassventil angeordneter Sensor beispielsweise eine große Menge an Gas anzeigt, welches in der Leitung nach dem Flüssigauslass des Gas-Flüssig-Abscheiders vorhanden ist, jedoch der Druck im Gas-Flüssig-Abscheider beziehungsweise in der Gasrückgewinnungsvorrichtung entsprechend hoch ist, kann das steuerbare Auslassventil kurzfristig geöffnet werden, um das zuvor beschriebene Problem hinsichtlich von Gas, welches in der Verbindungsleitung zwischen dem Flüssigauslass des Gas-Flüssig-Abscheiders und dem steuerbaren Auslassventil zu Beginn der Beginn der Chromatographie vorhanden sein kann, zu lösen.

Nach dem steuerbaren Auslassventil kann in Flussrichtung gesehen eine Vorrichtung zur Verringerung des Gehalts an zweitem Fluid vorgesehen sein. Demgemäß kann vorzugsweise vorgesehen sein, dass die Chromatographie-Anlage in Flussrichtung gesehen nach dem steuerbaren Auslassventil eine Vorrichtung zur Verringerung des Gehalts an zweitem Fluid vorgesehen ist. Die bei hohem Druck betriebene Gasrückgewinnung kann insbesondere dazu führen, dass das erste, aus dem Flüssigauslass des Gas-Flüssig-Abscheider ausgeleitete Flüssigkeit relativ hohe Anteile an zweitem Fluid, beispielsweise CO₂ umfasst, welches bei einer Sammlung der Fraktion stören kann. Hierzu geeignete Vorrichtungen sind allgemein bekannt. Hierzu gehören unter anderem Gas-Flüssig-Abscheider und gasdurchlässige Verbindungsleitungen, die zwischen dem steuerbaren Auslassventil, das nach dem Flüssigauslass des Gas-Flüssig-Abscheiders angeordnet ist, und dem Fraktionssammler vorgesehen sind.

Beispielsweise kann ein zweiter Gas-Flüssig-Abscheider vorgesehen sein, der
a) einen Abscheidebereich mit einer Einlassdüse, einer Pralleinheit und einer Gasleiteinheit;
b) einen Trennbereich mit einem Flüssigauslass und
c) einen Gasausleitbereich mit einem Gasauslass;
umfasst, wobei der Abscheidebereich mit dem Trennbereich über eine Abscheideöffnung verbunden ist und die Einlassdüse so ausgestaltet ist, dass ein durch die Einlassdüse geleiteter Gas-Flüssigstrom gegen die Pralleinheit beaufschlagbar ist. Derartige Gas-Flüssig-Abscheider werden zuvor und nachfolgend beschrieben, so dass hierauf verwiesen wird. Der zweite Gas-Flüssig-Abscheider ist in Flussrichtung gesehen nach dem zweiten Rückdruckventil angeordnet, welches nach dem Flüssigauslass des Gas-Flüssig-Abscheider vorgesehen ist. Der zweite Gas-Flüssig-Abscheider weist vorzugsweise ein kleineres Volumen auf als der erste Gas-Flüssig-Abscheider, dessen Gasauslass mit der Gasrückgewinnungsvorrichtung verbunden ist. Vorzugsweise kann vorgesehen sein, dass das Verhältnis des Volumens des zweiten Gas-Flüssig-Abscheiders zum Volumen des ersten Gas-Flüssig-Abscheiders im Bereich von 1/20 bis 1/2, bevorzugt 1/10 bis 1/4 beträgt.

Weiterhin kann ein Zyklonabscheider eingesetzt werden, wie diese weithin in der Fachwelt bekannt sind. Ferner werden geeignete Abscheider in WO 2018/034649 A1 und WO 2012/174437 A1.

Ferner kann ein für eine Verringerung des Gasgehalts einer Flüssigkeit ausreichend langes gasdurchlässige Verbindungsleitung eingesetzt werden. Hierfür kann ein semipermeables Kunststoffmaterial eingesetzt werden, beispielsweise Teflon, besonders bevorzugt AF 2400 (kommerziell erhältlich von DuPont), wobei diese Verbindungsleitung gegebenenfalls durch eine netzartige Metalldraht-Ummantelung stabilisiert werden kann.

Der Gasauslass des (ersten) Gas-Flüssig-Abscheiders ist mit einer Gasrückgewinnungsvorrichtung verbunden.

In einer bevorzugten Ausgestaltung umfasst die Gasrückgewinnungsvorrichtung mindestens einen Druckbehälter, der temperierbar ist. In einer bevorzugten Weiterbildung kann vorgesehen sein, dass der Druckbehälter in Fließverbindung mit dem Flüssigkeitsreservoir für ein zweites Fluid verbindbar oder verbunden ist oder der Druckbehälter in Fließverbindung mit der zweiten Pumpe verbindbar oder verbunden ist.

Ein Druckbehälter im Sinne der vorliegenden Erfindung ist ein Gefäß, das einen Einlass und mindestens einen Auslass umfasst und sich von der Zubeziehungsweise Ableitung durch eine größere Querschnittsfläche unterscheidet, wobei sich die Querschnittsfläche auf die Flussrichtung des Fluids bezieht.

Vorzugsweise kann vorgesehen sein, dass der Druckbehälter ein Volumen im Bereich von 1000 ml bis 100000 ml, bevorzugt 2000 bis 50000 ml und besonders bevorzugt 4000 bis 10000ml aufweist.

Vorzugsweise kann vorgesehen sein, dass das Flüssigkeitsreservoir für ein zweites Fluid eine Flüssigkeitsauslassleitung aufweist und der Druckbehälter mit einer Druckbehälter-Auslassleitung verbunden ist, wobei die Flüssigkeitsauslassleitung des Flüssigkeitsreservoirs für ein zweites Fluid und die Druckbehälter-Auslassleitung in ein zweites Verbindungsstück zusammengeführt werden und aus diesem zweiten Verbindungsstück in eine gemeinsame Pumpenzuführleitung ausgeleitet werden, wobei die gemeinsame Pumpenzuführleitung mit der zweiten Pumpe verbunden ist.

In einer bevorzugten Ausgestaltung ist in der Druckbehälter-Auslassleitung in Flussrichtung gesehen vor dem zweiten Verbindungsstück ein Rückschlagventil vorgesehen.

In einer weiterhin bevorzugten Ausgestaltung ist in der Druckbehälter-Auslassleitung in Flussrichtung gesehen vor dem zweiten Verbindungsstück eine Pumpe vorgesehen, wobei besonders bevorzugt nach dem Pumpenauslass ein Rückschlagventil vorgesehen ist.

Ferner kann vorgesehen sein, dass in der Flüssigkeitsauslassleitung des Flüssigkeitsreservoirs für ein zweites Fluid in Flussrichtung gesehen vor dem zweiten Verbindungsstück ein Rückschlagventil vorgesehen ist.

Weiterhin kann vorgesehen sein, dass zumindest ein Teil der Pumpenzuführleitung in Flussrichtung gesehen nach dem zweiten Verbindungsstück kühlbar ausgestaltet ist. Vorzugsweise ist in der Pumpenzuführleitung in Flussrichtung gesehen nach dem zweiten Verbindungsstück ein Wärmetauscher vorgesehen.

Durch diese Maßnahme kann überraschend die Effizienz der Gasrückgewinnungsvorrichtung gesteigert werden.

Vorzugsweise kann vorgesehen sein, dass die Gasrückgewinnungsvorrichtung eine Abscheidevorrichtung für Lösungsmittel aufweist. Abscheidevorrichtungen für Lösungsmittel sind in der Fachwelt weithin bekannt, wobei diese im Allgemeinen einen Auslass für ein Lösungsmittel umfassen, über den abgetrenntes Lösungsmittel der Anlage entnommen werden kann.

Vorzugsweise kann die Abscheidevorrichtung für Lösungsmittel als Druckbehälter ausgestaltet sein, durch welchen Lösungsmittel abgeschieden werden können.

Vorzugsweise kann vorgesehen sein, dass die Abscheidevorrichtung für Lösungsmittel vorzugsweise vor einem Druckbehälter angeordnet ist.

In einer weiteren Ausgestaltung umfasst die Gasrückgewinnungsvorrichtung vorzugsweise eine Abscheidevorrichtung für Lösungsmittel, die in Flussrichtung gesehen vor einem beziehungsweise dem Druckbehälter, der temperierbar ist, angeordnet ist.

In einer bevorzugten Ausgestaltung kann vorgesehen sein, dass die Abscheidevorrichtung für Lösungsmittel einen Rektifikationskolonnenkörper umfasst, wobei das zweite Fluid, vorzugsweise CO₂ über Kopf ausgeleitet wird und erstes Fluid, beispielsweise Methanol, Acetonitril oder Aceton, über eine im Bodenbereich vorgesehene verschließ- und öffenbare Absperrvorrichtung aus der Gasrückgewinnungsvorrichtung entnommen werden kann. Der Rektifikationskolonnenkörper umfasst bevorzugt Einbauten oder eine Füllung zur Verbesserung der Trennleistung umfasst, einen Ausleitbereich, aus dem das zweite Fluid, vorzugsweise CO₂ in weitere Teile der Gasrückgewinnungsvorrichtung überführt werden kann und einen Bodenbereich, wobei dieser vorzugsweise temperierbar ausgestaltet ist, um Reste an zweitem Fluid, vorzugsweise CO₂-Reste in die Gasphase zu überführen. Der Rektifikationskolonnenkörper kann als Druckbehälter angesehen werden.

In einer bevorzugten Ausführungsform der vorliegenden Erfindung kann vorgesehen sein, dass die Abscheidevorrichtung für Lösungsmittel temperierbar ist.

Vorzugsweise kann vorgesehen sein, dass der Ausleitbereich des Rektifikationskolonnenkörpers mit einem Kondensator verbunden ist, so dass in diesem Bereich das zweite Fluid, insbesondere durch Abkühlung auf eine beim vorgesehenen Druck geeignete Temperatur, verflüssigt wird. Der Kondensator kann als Druckbehälter angesehen werden. Diese Ausgestaltung ist insbesondere für den Fall vorteilhaft, dass nach dem Kondensator, jedoch vor einem zweiten Verbindungsstück oder, je nach Ausgestaltung der Anlage, vor dem zweiten Flüssigkeitsreservoir für ein zweites Fluid eine Pumpe vorgesehen ist.

Vorzugsweise kann vorgesehen sein, dass ein nach der Abscheidevorrichtung für Lösungsmittel vorgesehener Kondensator auf Temperaturen unterhalb von 10 °C, vorzugsweise unterhalb von 0 °C und besonders bevorzugt unterhalb von -5 °C kühlbar ist. Diese Ausgestaltung ist insbesondere vorteilhaft, falls nach dem Kondensator, jedoch vor einem zweiten Verbindungsstück oder, je nach Ausgestaltung der Anlage, vor dem zweiten Flüssigkeitsreservoir für ein zweites Fluid eine Pumpe vorgesehen ist.

In einer Ausgestaltung bei der die Gasrückgewinnungsvorrichtung eine Abscheidevorrichtung für Lösungsmittel und einen Kondensator umfasst, kann vorzugsweise vorgesehen sein, dass die Temperatur im Kondensator, der in Flussrichtung gesehen, nach dem Rektifikationskolonnenkörper angeordnet ist, 1 bis 35 °C niedriger ist als im temperierbar ausgestaltet Teil des Rektifikationskolonnenkörpers, vorzugsweise 2 bis 20°C und besonders bevorzugt 5 bis 15°C.

In einer weiteren, bevorzugten Ausgestaltung der Gasrückgewinnungsvorrichtung umfasst diese eine Abscheidevorrichtung für Lösungsmittel mit einem Rektifikationskolonnenkörper, wobei nach dem Rektifikationskolonnenkörper und vor einem zweiten Verbindungsstück, über welches die Flüssigkeitsauslassleitung des Flüssigkeitsreservoirs für ein zweites Fluid und die Druckbehälter-Auslassleitung zusammengeführt werden und aus diesem zweiten Verbindungsstück in eine gemeinsame Pumpenzuführleitung ausgeleitet werden, wobei kein zweiter Druckbehälter vorgesehen ist. In dieser bevorzugten Ausgestaltung ist des Weiteren vorzugsweise keine Pumpe zwischen dem Rektifikationskolonnenkörper und dem zweiten Verbindungsstück vorgesehen.

Durch die Verwendung einer eine Abscheidevorrichtung für Lösungsmittel mit einem Rektifikationskolonnenkörper kann überraschend die Effizienz der Fluid-, vorzugsweise der CO₂-Rückgewinnung gesteigert werden. Weiterhin kann der Anteil an mitgeführtem ersten Lösungsmittel verringert und das erste Lösungsmittel besser abgetrennt werden.

Gasrückgewinnungsanlagen mit einem Kondensator und einer Pumpe, die nach dem Kondensator, jedoch vor einem zweiten Verbindungsstück oder, je nach Ausgestaltung der Anlage, vor dem zweiten Flüssigkeitsreservoir für ein zweites Fluid vorgesehen ist, führt überraschend zu einer Steigerung der Effizienz der Gasrückgewinnungsvorrichtung, da der Druck mit dem das zweite Fluid aus einem Flüssigkeitsreservoir für ein zweites Fluid entnommen wird, nicht stark verringert werden muss und daher keine Wärme zur Verhinderung einer zu starken Abkühlung des zweiten Fluids zugeführt werden muss. Eine Gasrückgewinnungsanlage, bei der keine Pumpe nach dem Kondensator, jedoch vor einem zweiten Verbindungsstück oder, je nach Ausgestaltung der Anlage, vor dem zweiten Flüssigkeitsreservoir für ein zweites Fluid vorgesehen ist, ist im Allgemeinen mit geringeren Kosten verbunden und bedarf vielfach einer geringeren Wartung.

Ferner kann vorgesehen sein, dass die Gasrückgewinnungsvorrichtung mindestens einen Absorber für ein erstes Lösungsmittel aufweist. Ferner kann vorgesehen sein, dass in einem Druckbehälter der Gasrückgewinnungsvorrichtung, beispielsweise einem einen Druckbehälter und einem zweiten Druckbehälter, oder einem Zusatzbehälter ein Adsorber für ein erstes Fluid, vorzugsweise ein Zeolith vorgesehen ist.

Bevorzugt einzusetzende Gas-Flüssig-Abscheider sind aus dem Stand der Technik, beispielsweise der Druckschrift WO 2014/012962 A1 mit der Anmeldenummer PCT/EP2013/06067 mit dem Anmeldedatum 17. Juli 2013 bekannt, wobei die Offenbarung dieser Druckschrift vollständig durch Referenz hierauf in die vorliegende Anmeldung zu Offenbarungszwecken eingefügt wird.

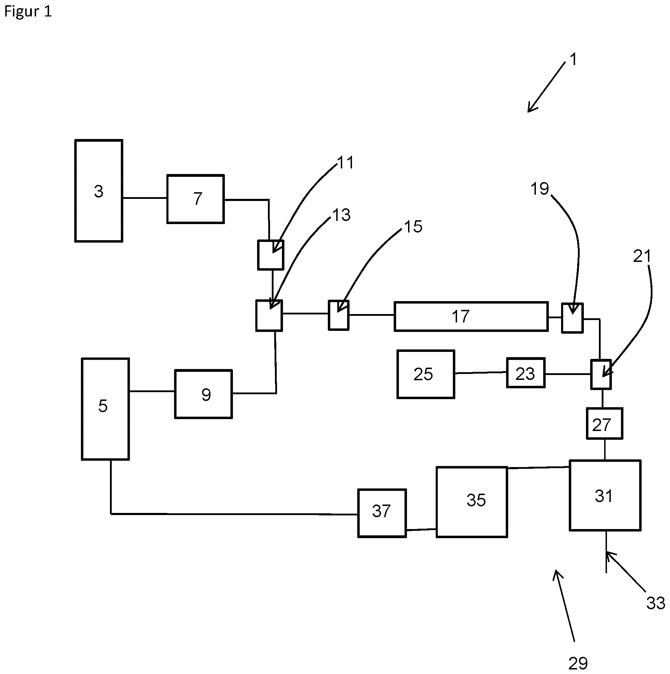

Ein besonders bevorzugt einzusetzender Gas-Flüssig-Abscheider wird in der PCT-Anmeldung WO 2018/210818 A1 mit der Anmeldenummer PCT/EP2018/062537 mit dem Anmeldedatum 15. Mai 2018 dargelegt, wobei die Offenbarung dieser Druckschrift, insbesondere die darin dargelegten Gas-Flüssig-Abscheider sowie die bevorzugten Ausführungsformen der Gas-Flüssig-Abscheider, vollständig durch Referenz hierauf in die vorliegende Anmeldung zu Offenbarungszwecken eingefügt wird. Insbesondere werden die Ausführungsformen der in den Figuren 1 bis 9 dargelegten Gas-Flüssig-Abscheider, durch Referenz auf die PCT-Anmeldung mit der Anmeldenummer PCT/EP2018/062537 in die vorliegende Anmeldung zu Offenbarungszwecken eingefügt.

Eine unerwartete Verbesserung einer Prallabscheidung kann durch die Anordnung und Ausgestaltung einer Abscheideöffnung erzielt werden. Hierdurch kann insbesondere das bei der Prallabscheidung bereitgestellte Gasvolumen vermindert werden, so dass das Gesamtvolumen des Gas-Flüssig-Abscheiders verringert werden kann. Hierdurch kann überraschend die Trennleistung der Chromatographie-Anlage verbessert werden.

Ein erfindungsgemäß einsetzbarer Gas-Flüssig-Abscheider umfasst einen Abscheidebereich mit einer Einlassdüse, einer Pralleinheit und einer Gasleiteinheit, einen Trennbereich mit einem Flüssigauslass und einen Gasausleitbereich mit einem Gasauslass, wobei der Abscheidebereich mit dem Trennbereich über eine Abscheideöffnung verbunden ist und die Einlassdüse so ausgestaltet ist, dass ein durch die Einlassdüse geleiteter Gas-Flüssigstrom gegen die Pralleinheit beaufschlagbar ist.

Die Verwendung eines Gas-Flüssig-Abscheider umfassend einen Abscheidebereich mit einer Einlassdüse, einer Pralleinheit und einer Gasleiteinheit führt überraschend zu einer besseren Abtrennung des ersten Lösungsmittels, welches bei Normalbedingungen flüssig ist, im Vergleich zu herkömmlichen Abscheidern, insbesondere Zyklonabscheidern, wie diese vielfach in den Anlagen gemäß dem zuvor genannten Stand der Technik eingesetzt werden, wobei diese Anlagen insbesondere ein CO₂-Recycling umfassen.

Hierbei ist Abscheidebereich so ausgestaltet, dass eine Prallabscheidung bewirkt wird. Prallabscheidung bedeutet, dass sich die im Aerosol befindlichen Flüssigkeitströpfchen gegen eine Pralleinheit geleitet werden, wodurch die Flüssigkeitströpfchen einen Flüssigkeitsfilm bilden können.

Als Pralleinheit kann hierbei jeder Körper dienen, gegen den der Aerosolstrom geleitet werden kann. Beispielsweise kann der Aerosolstrom gegen einen oberen Bereich des Abscheidebereichs geleitet werden, beispielsweise gegen einen oberen Abschluss des Abscheidebereichs. Hierbei kann ein Vorsprung, beispielsweise ein Dorn oder ähnliches vorgesehen sein, auf den der Aerosolstrom beaufschlagt wird, so dass die auf die Pralleinheit geleiteten Flüssigkeitströpfchen nicht zurückgeworfen werden oder von der Pralleinheit zurückprallen, sondern einen Film bilden.

Ein bevorzugter Gas-Flüssig-Abscheider nutzt im Betrieb die Gravitation, die eine Trennung von Gas und Flüssigkeit bewirkt. Demgemäß bezieht sich der Ausdruck oben auf die Ausrichtung des Gas-Flüssig-Abscheiders, die im Betrieb vorliegt, so dass ein Gas nach oben ausströmen kann, während unten die Gegenrichtung ist, über die eine Flüssigkeit den Gas-Flüssig-Abscheider verlässt.

Neben einer Pralleinheit ist im Abscheidebereich des Gas-Flüssig-Abscheiders eine Einlassdüse vorgesehen. Durch die Einlassdüse wird das Aerosol in den Gas-Flüssig-Abscheider, insbesondere in den Abscheidebereich des Gas-Flüssig-Abscheiders geleitet.

Hierbei ist Einlassdüse so ausgestaltet, dass ein durch die Einlassdüse geleiteter Gas-Flüssigstrom gegen die Pralleinheit beaufschlagbar ist, wie dies zuvor bereits im Hinblick auf die Pralleinheit dargelegt wurde.

Die Form und die Art der Einlassdüse sind unkritisch, so dass diese vom Fachmann im Rahmen seiner Fähigkeiten gewählt werden kann. So kann die Einlassdüse beispielsweise so ausgestaltet sein, dass das Aerosol in Form eines sehr engen Strahls auf die Pralleinheit geleitet wird. Ferner kann die Einlassdüse auch so konstruiert ist, dass ein kegelförmiger Sprühnebel auf die Pralleinheit geleitet wird.

Der Gas-Flüssig-Abscheider weist eine Abscheideöffnung auf, die zwischen Abscheidebereich und Trennbereich angeordnet ist, so dass eine gas- und flüssigkeitsoffene Verbindung zwischen diesen Bereichen besteht. Durch die Abscheideöffnung wird vorzugsweise eine Trägheitsabscheidung bewirkt. Dies bedeutet, dass die an der Pralleinheit und/oder der Gasleiteinheit in Form eines Flüssigkeitsfilms nach unten laufende Flüssigkeit von dem Gas durch Trägheit abschieden wird. Hierbei beschleunigt das Gas vorzugsweise die Flüssigkeit, so dass die Flüssigkeit mit einer höheren Geschwindigkeit in den Trennbereich überführt wird, als ohne diese Gasbeschleunigung. Hierbei verbleibt der Flüssigkeitsfilm vorzugsweise an einer Wand des Abscheidebereichs, die vorzugsweise als Teil der der Pralleinheit und/oder der Gasleiteinheit ausgestaltet ist, in Form eines Films und geht unmittelbar in den Trennbereich über, ohne dass der Flüssigkeitsfilm diese Wand, die in den Trennbereich übergeht, verlässt. Die Gasphase haftet im Gegensatz zur Flüssigphase nicht an einer Wand, sondern ist in der Lage nach oben auszutreten und in den Gasausleitbereich überzugehen. Im Gegensatz hierzu wird die Flüssigkeit in den Trennbereich abgeleitet und über den Flüssigauslass, der im Trennbereich vorgesehen ist, dem Gas-Flüssig-Abscheider entnommen.

Vorzugsweise ist der Abstand der Einlassdüse von der Pralleinheit größer als die kleinste Längenausdehnung der Abscheideöffnung. Hierbei ergibt sich der Abstand der Einlassdüse von der Pralleinheit aus dem Weg des Aerosols vom Verlassen der Einlassdüse bis zum Auftreffen auf die Pralleinheit. Die kleinste Längenausdehnung der Abscheideöffnung bezieht sich auf die Breite oder Länge der Abscheideöffnung, wobei sich die Ausdehnung der Ebene bis zum Rand der Abscheideöffnung auf die Ebene zwischen Abscheidebereich und Trennbereich bezogen wird, die zu einer minimalen Fläche der Abscheideöffnung führt. In dieser Ebene, in der die Abscheideöffnung liegt, wird die Länge der längsten Ausdehnung der Abscheideöffnung bestimmt, so dass anschließend die kürzeste Länge der Abscheideöffnung gemessen werden kann, die senkrecht zur längsten Ausdehnung der Abscheideöffnung liegt. Diese kleinste Längenausdehnung kann hierin auch als Breite der Abscheideöffnung angesehen werden.

Die räumliche Form des Abscheidebereichs ist nicht kritisch und kann den Bedürfnissen angepasst werden. Hierbei wird vorzugsweise im Abscheidebereich eine Gasleiteinheit gebildet. Die Gasleiteinheit bewirkt eine Veränderung der Strömungsgeschwindigkeit eines Gases, so dass im Bereich der Einlassdüse eine geringere Gasgeschwindigkeit vorliegt als im Bereich der Abscheideöffnung. Da der Volumenstrom bei gleicher Aerosolzusammensetzung als konstant angesehen werden kann, bedeutet dies, dass dem Aerosol zunächst in einen relativ großen Raum geleitet wird, der anschließend verengt wird, so dass die Strömungsgeschwindigkeit zunimmt.

In einer bevorzugten Ausgestaltung kann der Abscheidebereich eine kreisförmige Querschnittsfläche im Bereich der Einlassdüse aufweisen. Der Abscheidebereich kann hierbei vorzugsweise so ausgestaltet sein, dass sich der Abscheidebereich von Einlassdüse in Richtung Abscheideöffnung vorzugsweise keilförmig verengt.

Ferner kann vorgesehen sein, dass der Gas-Flüssig-Abscheider mit einer Strömungsrichtung des Gases im Abscheidebereich betreibbar ist, die im Wesentlichen senkrecht zur Strömungsrichtung der Flüssigkeit ist.

**In** einer besonders bevorzugten Ausführungsform weist der Abscheidebereich keine kreisförmige Querschnittsfläche im Bereich der Einlassdüse auf, wobei der Abscheidebereich vorzugsweise mindestens drei Seitenwände umfasst, die zusammen mit einem oberen Abschluss einen Raum definieren, der über die Abscheideöffnung mit dem Trennbereich verbunden ist.

Ferner kann vorgesehen sein, dass der Gas-Flüssig-Abscheider mit einer Strömungsrichtung des Gases im Abscheidebereich betreibbar ist, die im Wesentlichen parallel zur Strömungsrichtung der Flüssigkeit ist.

Vorzugsweise kann vorgesehen sein, dass die Abscheideöffnung des Gas-Flüssig-Abscheiders so ausgestaltet ist, dass die Strömungsgeschwindigkeit des Gases im Trennbereich vermindert wird. **In** einer bevorzugten Ausgestaltung ist Abscheideöffnung des Gas-Flüssig-Abscheider so ausgestaltet ist, dass die Abscheideöffnung zwei, drei, vier oder mehr Teilabscheideöffnungen aufweist, durch deren Anordnung eine Absenkung der Strömungsgeschwindigkeit des Gases bewirkbar ist.

In einer weiteren bevorzugten Ausgestaltung kann vorgesehen sein, dass im Abscheidebereich des Gas-Flüssig-Abscheiders eine Umleiteinheit vorgesehen ist, über die der Aerosolstrom auf eine zweite Pralleinheit beaufschlagbar ist.

Der Gasausleitbereich dient zur Ableitung der Gasphase aus dem Gas-Flüssig-Abscheider, so dass dieser einen Gasauslass umfasst.

Vorzugsweise ist der Gasausleitbereich so ausgestaltet, dass die Gasgeschwindigkeit am Gasauslass maximal ist, vorzugsweise die Gasgeschwindigkeit in Gasflussrichtung vom Trennbereich in Richtung Gasauslass gesehen, zunimmt. Hierdurch kann ein Saugeffekt erzeugt werden, der zu einem sicheren und wartungsarmen Betrieb des Gas-Flüssig-Abscheiders führt. Ferner kann hierdurch das Volumen des Gas-Flüssig-Abscheiders verringert werden, ohne dass dessen Leistungsfähigkeit in anderen Eigenschaften, beispielsweise die Trenneigenschaften abnimmt.

In Umkehrung des Abscheidebereichs nimmt daher der Raum von Richtung Trennbereich hin zum Gasauslass ab. Vorzugsweise verjüngt sich demgemäß die Querschnittsfläche von Richtung Trennbereich hin zum Gasauslass.

Der Gas-Flüssig-Abscheider weist vorzugsweise ein Volumen im Bereich von 20ml bis 100ml, besonders bevorzugt im Bereich von 20ml bis 70ml, speziell bevorzugt im Bereich von 20ml bis 50ml, auf. Bei einer im Wesentlichen quaderförmigen Gestalt, die beispielsweise im oberen und/oder unteren Bereich des Gas-Flüssig-Abscheiders, der durch die Einlassdüse beziehungsweise durch den Flüssigauslass gegeben ist, bogenförmig oder als Kuppel ausgestaltet sein kann, liegt die Höhe des Gas-Flüssig-Abscheiders vorzugsweise im Bereich von 8cm bis 150cm, besonders bevorzugt im Bereich von 10cm bis 12cm, wobei die Höhe durch die Längenausdehnung in Gasflussrichtung, als von Einlassdüse in Richtung Flüssigauslass gegeben ist. Die Breite und Tiefe des Gas-Flüssig-Abscheiders liegen jeweils vorzugsweise im Bereich von 15mm bis 60mm, besonders bevorzugt im Bereich von 15mm bis 25mm.Diese Angaben beziehen sich auf ersten Gas-Flüssig-Abscheider, der zwischen der Chromatographiesäule und der Gasrückgewinnungsvorrichtung vorgesehen ist.

Gemäß einer bevorzugten Ausführungsform kann der Gas-Flüssig-Abscheider zerlegbar ausgestaltet sein, so dass einzelne Bauteile zusammen- und auseinander gebaut werden können. Hierdurch kann der Gas-Flüssig-Abscheider bei einer Verschmutzung leicht gereinigt werden. Beispielsweise kann ein im Wesentlichen quaderförmiger Grundkörper mit einer geeigneten Aussparung hergestellt werden, auf die eine Abdeckung, die Seitenwand dient über eine Verschraubung aufgebracht werden. Die als Abdeckung dienende Seitenwand kann die Funktion der Pralleinheit übernehmen und/oder als Teil der Gasleiteinheit übernehmen, wie dies zuvor beschrieben wurde. Ein weiterer Teil der Gasleiteinheit, der vorzugsweise weiterhin eine Seitenwand des Gasausleitbereichs darstellt, kann in dieser Ausführungsform in den im Wesentlichen quaderförmiger Grundkörper mit einer geeigneten Aussparung durch einen Formschluss, durch Verschweißen, vorzugsweise Laserschweißen, Verkleben oder ähnlichem befestigt werden, so dass die zuvor dargelegten Bereiche, insbesondere mindestens ein Abscheidebereich, mindestens ein Trennbereich und mindestens ein Gasausleitbereich entstehen. Bevorzugt wird ein Gas-Flüssig-Abscheider durch spanende Bearbeitung, vorzugsweise Fräsen eines Materialblocks hergestellt, der vorzugsweise aus Kunststoff ist. Vorzugsweise wird eine Seitenwand durch eine Deckplatte gebildet, die durch Druck, der beispielsweise durch Verschrauben gebildet wird, mit dem ausgefrästen Materialblock verbunden wird. Durch einfaches Entfernen der Schrauben und Entfernen der Deckplatte kann der Gas-Flüssig-Abscheider zuverlässig gereinigt werden, wie dies zuvor und nachfolgend beschrieben ist.

In einer bevorzugten Ausgestaltung, bei der der Gas-Flüssig-Abscheider zerlegbar ausgestaltet ist, kann vorgesehen sein, dass der Gas-Flüssig-Abscheider besondere Abdichtungen aufweist, die insbesondere dazu dienen können, den erhöhten Druckbedingungen, die innerhalb des Gas-Flüssig-Abscheiders herrschen können, standzuhalten. Beispielsweise spezielle Dichtungen vorgesehen sein, die in Nute eingebracht werden können. Die Bauteile, zwischen denen die Dichtungen angeordnet sind, können beispielsweise unter einem geeigneten Druck zusammengepresst werden und so zusammen mit den Dichtungen, den im Gas-Flüssig-Abscheider vorgesehenen Drücken standhalten.

Weitere Ausführungen zu bevorzugt einzusetzenden Gas-Flüssig-Abscheider sind in den zuvor dargelegten Druckschriften WO 2014/012962 A1 und WO 2018/210818 A1 dargelegt, die durch Referenz hierin eingefügt sind.

Die Chromatographie-Anlage umfasst vorzugsweise eine Zugabeeinheit. Die Zugabeeinheit ist In Flussrichtung gesehen vor der Chromatographie-Säule vorgesehen. In einer bevorzugten Ausführungsform ist die Zugabeeinheit In Flussrichtung gesehen vor dem Verbindungsstück vorgesehen. Über die Zugabeeinheit wird eine aufzutrennende Probe in die Chromatographie-Anlage eingespeist. Diese Zugabeeinheiten sind als solche bekannt und werden auch als Probengeber bezeichnet. Beispielsweise kann die Zugabeeinheit als Einspeisestelle ausgestaltet sein, über die die Probe in die Chromatographie-Anlage zugegeben werden kann. In einer bevorzugten Ausgestaltung umfasst die Zugabeeinheit eine Probeschleife und ein Injektionsventil, über das die Probeschleife in eine Fließverbindung mit dem Verbindungsstück schaltbar ist.

Die Zugabeeinheit umfasst vorzugsweise eine Probeschleife in die eine aufzutrennende Probe eingebracht werden kann. Die Probeschleife ist in Fließverbindung mit einem der Flüssigkeitsreservoirs, vorzugsweise dem ersten Flüssigkeitsreservoir und dem Verbindungsstück schaltbar. Die Probeschleife kann durch einen Überdruck oder einen Unterdruck mit einer Probe beschickt werden. Beispielsweise kann diese durch Injektion befüllt werden. Ferner kann ein Probengefäß vor einer Probenschleife angeordnet sein und nach der Probenschleife ein Abfallgefäß, wobei zwischen Probenschleife und Abfallgefäß eine Pumpe, beispielsweise eine Schlauch- oder eine Zahnradpumpe angeordnet ist, die aus dem Probengefäß eine Probe ansaugt und in die Probenschleife überführt. Das Volumen der Probenschleife kann entsprechend den Bedürfnissen gewählt werden. Vorzugsweise kann vorgesehen sein, dass das Volumen der Probenschleife im Bereich von 0,5 ml bis 30 ml, vorzugsweise im Bereich von 1 ml bis 20 ml, besonders bevorzugt im Bereich von 2,5 ml bis 10 ml aufweist.

Beispielsweise werden geeignete Zugabeeinheiten in den Druckschriften DE 10 2008 006266 A1, WO 2008/107562 A2, WO 2010/139359 A1, DE 2020/16100451 U1, WO 2018/128836 A1 und WO 2013/134222 A1 beschrieben, wobei zu Offenbarungszwecken die Beschreibung der in diesen Druckschriften dargelegten Zugabeeinheiten durch Referenz hierauf in die vorliegende Anmeldung eingefügt werden.

Ferner kann vorgesehen sein, dass die Chromatographie-Anlage mindestes einen Mischer umfasst. Demgemäß kann vorgesehen sein, dass die Chromatographie-Anlage einen Mischer zur Mischung des ersten Fluids und des zweiten Fluids umfasst, der zwischen Verbindungsstück und Chromatographiesäule vorgesehen ist. Vorzugsweise ist der Mischer in Flussrichtung gesehen nach der Zugabeeinheit und vor der Chromatographie-Säule angeordnet. Der Mischer kann als aktiver oder passiver Mischer ausgestaltet sein. Überraschende Vorteile können durch den Einsatz von passiven Mischern erreicht werden. Besondere, nicht vorhersagbare Vorteile können insbesondere dadurch erzielt werden, dass der Mischer als statischer Mischer ausgestaltet ist. Statische Mischer umfassen strömungsbeeinflussende Elemente, die ein einen Körper eingebracht sind, der einen Zu- und eine Ableitung aufweist. Beispielsweise kann ein rohrförmiger, mit inerten Partikeln versehener Körper als statischer Mischer eingesetzt werden.

Das Volumen des Mischers kann nach den Bedürfnissen des Anwenders gewählt werden, wobei dies im Allgemeinen von der Leistungsfähigkeit der Anlage abhängig ist, wie beispielsweise dem Volumenstrom, den die Anlage bereitstellen kann. Je größer der Volumenstrom, desto größer das Volumen bevorzugter Mischer. Ferner kann vorgesehen sein, dass der Mischer ein Volumen im Bereich von 0,5 ml bis 60 ml, vorzugsweise im Bereich von 1 ml bis 30 ml aufweist.

Vorzugsweise kann der Mischer über ein Mischschaltventil geschaltet werden. **In** einer bevorzugten Ausführungsform kann vorgesehen sein, dass die Chromatographie-Anlage ein Mischerschaltventil und ein über das Mischerschaltventil schaltbarer Mischer umfasst, wobei das Mischerschaltventil mindestens zwei Schaltpositionen aufweist, wobei in einer ersten Position der Mischer zuschaltbar ist und in einer zweiten Position der Mischer überbrückbar ist. Besonders geeignete Mischerschaltventile sind beispielsweise aus der Druckschrift DE 10 2022 101 546 mit der Anmeldenummer DE 10 2022 101 546.7 mit dem Anmeldedatum 24. Januar 2022 bekannt, wobei die Offenbarung dieser Druckschrift vollständig durch Referenz hierauf in die vorliegende Anmeldung zu Offenbarungszwecken eingefügt wird. Vorzugsweise wird der Mischer während der Probenzugabe umgeleitet und nach Auftragung der Probe auf die Chromatographiesäule zugeschaltet.

Ferner kann vorgesehen sein, dass mit der Anlage eine Chromatographie mit einem Lösungsmittelgradienten durchführbar ist.

Vorzugsweise kann vorgesehen sein, dass die Chromatographie-Anlage über eine Chromatographie-Anlagen-Steuerung steuerbar ist.

Ferner kann vorgesehen sein, dass die Chromatographie-Anlage mindestens einen Detektor aufweist. Vorzugsweise kann vorgesehen sein, dass die Chromatographie-Anlage einen UV-Detektor umfasst. Weiterhin kann vorgesehen sein, dass die Chromatographie-Anlage ein Massenspektrometer als Detektor umfasst. **In** einer besonders bevorzugten Ausführungsform umfasst die Anlage einen UV-Detektor und ein Massenspektrometer.

Weiterhin kann die Chromatographie-Anlage einen Fraktionssammler aufweisen, über den aufgereinigte Proben gesammelt werden können.

Darüber hinaus weist eine für überkritische Flüssigkeitschromatographie ausgelegte Chromatographie-Anlage vorzugsweise mindestens ein Flüssigkeitsreservoir für das Lösungsmittel und ein Flüssigkeitsreservoir für das überkritische Fluid, beispielsweise CO₂ auf, wobei diese Komponenten auch mit einer Anlage verbindbar sein können. Im Allgemeinen wird das Fluid aus dem Flüssigkeitsreservoir entnommen und mit jeweils mindestens einer Pumpe in ein Verbindungsstück überführt, welches mit einer Chromatographiesäule in Fließverbindung steht. Die Pumpen und/oder das Verbindungsstück sowie die Chromatographiesäule können mit einer Temperierung versehen sein, um jeweils eine vorgegebene Temperatur einstellen zu können. Hierzu können insbesondere Wärmetauscher vorgesehen sein. Die Zugabe von zu trennenden Mischungen, insbesondere aufzureinigenden Substanzen, kann durch eine zuvor näher ausgeführte Zugabeeinheit erfolgen, die vorzugsweise in der Leitung vorgesehen sind, in der das Lösungsmittel zu einem Mischer geführt wird.

Bevorzugt kann vorgesehen sein, dass die Chromatographie-Anlage eine Injektionsvorrichtung umfasst, mit der automatisch Proben in die Chromatographie-Anlage injiziert werden können.

Das die Chromatographiesäule verlassende Fluid wird vorzugsweise zumindest teilweise einer Detektions- oder Analyseeinheit zugeführt. Vorzugsweise kann vorgesehen sein, dass die Chromatographie-Anlage einen UV-Detektor umfasst. Weiterhin kann vorgesehen sein, dass die Chromatographie-Anlage ein Massenspektrometer als Detektor umfasst. In einer besonders bevorzugten Ausführungsform umfasst die Anlage einen UV-Detektor und ein Massenspektrometer. Hierbei können auch weitere Verfahren zur Detektion eingesetzt werden, die beispielsweise die Lichtstreuung, die Fluoreszenz oder den Brechungsindex messen. Ferner werden vielfach Massenspektrometer und/oder Leitfähigkeitsdetektoren usw. eingesetzt.

Nach der Chromatographiesäule und vorzugsweise nach der Detektions- oder Analyseeinheit ist im Allgemeinen ein erster Rückdruckregler und vorzugsweise nach dem ersten Rückdruckregler ein Wärmetauscher vorgesehen. Das den Wärmetauscher verlassende Aerosol wird vorzugsweise nachfolgend einem Gas-Flüssig-Abscheider zugeführt.

Die Flüssigkeitsphase des Aerosols wird bevorzugt in einem Fraktionssammler gesammelt. Die gesammelten Fraktionen werden besonders bevorzugt automatisch als Hauptfraktionen gesammelt, während überschüssiges Lösungsmittel einer Aufbereitung oder einer Entsorgung unterworfen werden kann. Die Verbindungsleitung zwischen dem Flüssigauslass des Gas-Flüssig-Abscheiders und des Fraktionssammlers kann bevorzugt so ausgestaltet sein, dass Reste der Gasphase, vorzugsweise CO₂-Reste über diese Verbindung entweichen können. Hierfür kann ein semipermeables Kunststoffmaterial eingesetzt werden, beispielsweise Teflon, besonders bevorzugt AF 2400 (kommerziell erhältlich von DuPont).

Ein bevorzugtes Verfahren zum Betreiben eines Fraktionierungssammlers bei einer Chromatographie ist aus dem Stand der Technik, beispielsweise der Druckschrift WO 2019/048369 A1 mit der Anmeldenummer PCT/EP2018/073503 mit dem Anmeldedatum 03. September 2018 bekannt, wobei die Offenbarung dieser Druckschrift vollständig durch Referenz hierauf in die vorliegende Anmeldung zu Offenbarungszwecken eingefügt wird.

Ferner kann vorgesehen sein, dass die Chromatographie-Anlage eine Chromatographie-Anlagen-Steuerung umfasst, die in Wirkverbindung mit einem Detektor und einem Fraktionssammler steht. Vorzugsweise ist die Steuerung so programmierbar, dass die Menge an Flüssigkeit, die in ein Gefäß des Fraktionssammlers einleitbar ist, in Abhängigkeit des Anteils an dem ersten Lösungsmittel festlegbar ist.

Weiterhin kann vorgesehen sein, dass die Chromatographie-Anlage eine Chromatographie-Anlagen-Steuerung umfasst, die in Wirkverbindung mit der ersten Pumpe steht, wobei die Pumpleistung der ersten Pumpe über die Chromatographie-Anlagen-Steuerung steuerbar ist. Ferner kann die Chromatographie-Anlagen-Steuerung zusätzlich in Wirkverbindung mit der zweiten Pumpe stehen und deren Pumpleistung steuern.

Vorzugsweise ist die Chromatographie-Anlage als SFC-Anlage ausgestaltet, wobei eine Chromatographie mit einem Lösungsmittelgradienten durchführbar ist.

Die SFC-Chromatographie-Anlage ist vorzugsweise bei einem Volumenstrom im Bereich von 10 ml/min bis 450 ml/min, besonders bevorzugt im Bereich von 50 ml/min bis 300 ml/min und speziell bevorzugt 100 ml/min bis 250 ml/min betreibbar. Weiterhin kann vorgesehen sein, dass die SFC- Chromatographie-Anlage vorzugsweise bei einem Volumenstrom von mindestens 10 ml/min, besonders bevorzugt von mindestens 50 ml/min und speziell bevorzugt von mindestens 100 ml/min betreibbar ist.

Die Gasphase des Aerosols wird gemäß der vorliegenden Erfindung rückgewonnen. Hierzu wird die Gasphase in eine Gasrückgewinnungsvorrichtung geleitet, wie diese zuvor und nachfolgend beschrieben ist.

Vorzugsweise kann vorgesehen sein, dass zwischen dem Gasauslass des Gas-Flüssig-Abscheiders und dem ersten Druckbehälter ein dritter Rückdruckregler vorgesehen ist. Diese Ausgestaltung ist besonders bevorzugt für den Fall, dass die Gasrückgewinnungsanlage eine Pumpe aufweist, die nach einem Druckbehälter vorgesehen ist

Ferner kann zwischen dem Gasauslass des Gas-Flüssig-Abscheiders und dem ersten Druckbehälter ein Rückschlagventil vorgesehen sein.

Gemäß einem anderen Aspekt wird auch ein Umwandlungskit bereitgestellt, durch das eine SFC- Anlage ohne Fluid-Recycling in eine SFC- Anlage mit einem Fluid-Recycling umgewandelt werden kann. Ein derartiges Kit umfasst mindestens einen Druckbehälter und ein steuerbares Auslassventil, wie oben beschrieben. Dieses im Kit enthaltene steuerbare Auslassventil dient vorzugsweise zum Einbau nach dem Flüssigkeitsauslass eines Gas-Flüssig-Abscheiders, wie dieser in einer SFC- Anlage vorgesehen ist. Vorzugsweise enthält das Kit weitere Komponenten, wie diese zuvor und nachfolgend beschrieben sind, beispielsweise um eine HPLC-Anlage in eine SFC- Anlage umzuwandeln, wie Wärmetauscher oder Rückdruckregler, wie diese zum Umbau einer HPLC-Anlage in eine SFC-Anlage eingesetzt werden.

In einer bevorzugten Varianten des Umwandlungskits kann vorgesehen sein, das Kit mindestens einen Druckbehälter, mindestens einen Rückdruckregler, ein steuerbares Auslassventil und einen der Gas-Flüssig-Abscheider umfasst, der
a) einen Abscheidebereich mit einer Einlassdüse, einer Pralleinheit und einer Gasleiteinheit;
b) einen Trennbereich mit einem Flüssigauslass und
c) einen Gasausleitbereich mit einem Gasauslass;
umfasst, wobei der Abscheidebereich mit dem Trennbereich über eine Abscheideöffnung verbunden ist und die Einlassdüse so ausgestaltet ist, dass ein durch die Einlassdüse geleiteter Gas-Flüssigstrom gegen die Pralleinheit beaufschlagbar ist.

Ein weiterer Gegenstand der vorliegenden Erfindung ist ein Verfahren zur Durchführung einer Chromatographie umfassend den Einsatz einer erfindungsgemäßen Chromatographie-Anlage.

Ein Chromatographie-Verfahren umfasst üblich Schritte, wobei hierzu insbesondere ein Probeauftragsschritt, ein Elutionsschritt und ein Sammelschritt gehören. Der Probeauftragsschritt und der Elutionsschritt können sequentiell und bei besonderen Verfahren auf parallel erfolgen, wobei letztere unter dem Namen "stacked injection" bekannt sind.

Hierzu kann vorgesehen sein, dass das Flüssigkeitsreservoir für ein erstes Fluid ein erstes Lösemittel enthält, das bei Normalbedingungen flüssig ist, und das Flüssigkeitsreservoir für ein zweites Fluid enthält, das bei Normalbedingungen gasförmig ist.

Im Hinblick auf den Begriff "SFC-Verfahren" beziehungsweise "überkritische Flüssigkeitschromatographie (SFC, Supercritical Fluid Chromatography)" ist festzuhalten, dass ein überkritischer Zustand nicht zwingend erreicht werden muss oder über den gesamten Verlauf einer Chromatographie aufrechtzuerhalten ist. Vielmehr bedeutet der Begriff Begriff "SFC-Verfahren" beziehungsweise "überkritische Flüssigkeitschromatographie (SFC, Supercritical Fluid Chromatography)", dass eine Chromatographie unter Verwendung einer komprimierbaren und leicht in einen überkritischen Zustand zu überführenden Substanz durchgeführt wird, die vorzugsweise bei Normalbedingungen gasförmig ist.

Bei einem SFC-Verfahren wird vorzugsweise eine Lösungsmittelzusammensetzung in eine Chromatographiesäule gepumpt wird, die zumindest einen Anteil an einem ersten Lösemittel enthält, das bei Normalbedingungen flüssig ist, und einen Anteil an einem zweiten Lösemittel enthält, das bei Normalbedingungen gasförmig ist. Es handelt sich hierbei vorzugsweise daher um eine SFC, wie diese zuvor und nachfolgend dargelegt wird. Normalbedingungen bedeuten 273,15 K = 0 °C und 1,01325 bar gemäß DIN 1343.

Zur Durchführung einer Trennung mit einem überkritischen Fluid wird ein anorganisches oder organisches Lösungsmittel eingesetzt, welches unter den üblichen Trennbedingungen, bevorzugt bei 25°C und Atmosphärendruck (1013,25 mbar) flüssig ist. Hierbei kann ein polares oder unpolares Lösungsmittel eingesetzt werden, je nach Art der aufzutrennenden oder aufzureinigenden Verbindungen. Diese Substanzen werden vorliegend insbesondere als erstes Lösemittel bezeichnet.

Bevorzugt ist das erste Lösungsmittel ausgewählt aus Alkohol, vorzugsweise Methanol, Ethanol oder Propanol, Hexan, Mischungen mit Dichlormethan, Chloroform, Wasser (vorzugsweise bis max. 3 Vol%, da ansonsten eine Mischungslücke auftreten kann), ein Aldehyd oder ein Keton, vorzugsweise Methylethylketon; ein Ester, vorzugsweise Essigsäureethylester; oder ein Ether, vorzugsweise Tetrahydrofuran, ein aliphatischer Kohlenwasserstoff, vorzugsweise Hexan, Cyclohexan, Heptan, Octan; ein aromatischer Kohlenwasserstoff, vorzugsweise Benzol, Toluol, Xylol. Diese Verbindungen können einzeln oder als Mischung eingesetzt werden.

Ferner kann vorgesehen sein, dass bei einem erfindungsgemäßen Verfahren vorzugsweise ein Gas eingesetzt wird, welches relativ einfach in einen überkritischen Zustand versetzt werden kann. Zu den bevorzugten Gasen, die diese Eigenschaften aufweist gehören unter anderem Kohlendioxid (CO₂), Ammoniak (NH₃), Freon, Xenon, wobei Kohlendioxid (CO₂) besonders bevorzugt ist. Diese Substanzen werden vorliegend insbesondere als zweites Lösemittel bezeichnet.

Bevorzugt kann vorgesehen sein, dass das in den überkritischen Zustand zu bringende Gas-Flüssiggemisch ein polares Lösungsmittel und ein Gas umfasst, welches ausgewählt ist aus der Gruppe bestehend aus, CO₂, NH₃, Freon, Xenon, vorzugsweise CO₂. Vorzugsweise ist das polare Lösungsmittel ein Alkohol, vorzugsweise Methanol, Ethanol oder Propanol, Hexan, Mischungen mit Dichlormethan, Chloroform, Wasser (vorzugsweise bis max. 3 Vol%, da ansonsten eine Mischungslücke auftreten kann), ein Aldehyd oder ein Keton, vorzugsweise Methylethylketon; ein Ester, vorzugsweise Essigsäureethylester; oder ein Ether, vorzugsweise Tetrahydrofuran.

Ferner kann vorgesehen sein, dass das in den überkritischen Zustand zu bringende Gas-Flüssiggemisch ein unpolares Lösungsmittel und ein Gas umfasst, welches ausgewählt ist aus der Gruppe bestehend aus, CO₂, NH₃, Freon, Xenon, vorzugsweise CO₂. Vorzugsweise ist das unpolare Lösungsmittel ein aliphatischer Kohlenwasserstoff, vorzugsweise Hexan, Cyclohexan, Heptan, Octan; ein aromatischer Kohlenwasserstoff, vorzugsweise Benzol, Toluol, Xylol; ein Ester, vorzugsweise Essigsäureethylester; oder ein Ether, vorzugsweise Tetrahydrofuran.

Die aus der Chromatographiesäule fließende Zusammensetzung wird vorzugsweise zumindest teilweise in einen Detektor eingeleitet. Demgemäß wird vorzugsweise eine Überprüfung der entsprechenden Zusammensetzung nach der Chromatographiesäule vorgenommen. Detektoren, die hierfür eingesetzt werden können sind allgemein bekannt, wobei insbesondere Spektroskopieverfahren, bei denen elektromagnetische Wellen eingesetzt werden, wie beispielsweise UV-, VIS-Spektroskopie durchgeführt werden. Hierbei können auch weitere Verfahren zur Detektion eingesetzt werden, die beispielsweise die Lichtstreuung, die Fluoreszenz oder den Brechungsindex messen. Ferner werden vielfach Massenspektrometer und/oder Leitfähigkeitsdetektoren usw. eingesetzt.

Diese Verfahren können kontinuierlich oder chargenweise die Eigenschaften der aus der Chromatographiesäule fließende Zusammensetzung messen, so dass diese Detektoren diese Eigenschaften im Durchfluss oder durch Probenentnahme bestimmen können, wobei die letztere im Allgemeinen vollautomatisch und kontinuierlich erfolgt. Einzelheiten dieser Techniken sind aus dem Stand der Technik bekannt.

Vorzugsweise wird eine das erste Lösungsmittel enthaltende Zusammensetzung nach dem Verlassen der Chromatographiesäule in Abhängigkeit des Detektorsignals in ein Sammelgefäß des Fraktionssammlers eingeleitet. Besonders bevorzugt kann vorgesehen sein, dass die Menge an Flüssigkeit, die in ein Sammelgefäß des Fraktionssammlers eingeleitet wird, in Abhängigkeit des Anteils an dem ersten Lösungsmittel gewählt wird.

Durch diese Maßnahme kann insbesondere erreicht werden, dass das Volumen eines Sammelgefäßes des Fraktionssammlers in überraschend guter Weise ausgenutzt werden kann. Hierdurch können insbesondere die zuvor dargelegten Kosten- und Handhabungsvorteile erzielt werden.

Weitere Kosten- und Handhabungsvorteile können dadurch erreicht werden, dass zumindest ein Teil der Zusammensetzung, die das erste Lösungsmittel enthält, nach dem Verlassen der Chromatographiesäule nicht in ein Sammelgefäß eingeleitet wird. Vorzugsweise werden Zusammensetzungen, die keine wertvolle Substanzen enthalten verworfen, wobei dies im Allgemeinen durch ein Steuerventil im Fraktionssammler bewirkt wird, der die zu verwerfenden Anteile der das erste Lösungsmittel enthaltenden Zusammensetzung nach dem Verlassen der Chromatographiesäule in einen Abfallbehälter oder ähnliches leitet.

In einer besonderen Ausgestaltung kann vorgesehen sein, dass die in eine Chromatographiesäule gepumpte Lösungsmittelzusammensetzung im Laufe der Chromatographie verändert wird.

Vorzugsweise wird der Anteil an erstem Lösungsmittel in der Lösungsmittelzusammensetzung im Laufe der Chromatographie erhöht und der Anteil an zweitem Lösungsmittel im Laufe der Chromatographie vermindert, wobei besonders bevorzugt der Anteil an erstem Lösungsmittel zu Beginn der Chromatographie mindestens 5 Vol.-%, speziell bevorzugt mindestens 10 Vol.-%, insbesondere speziell bevorzugt mindestens 20 Vol.-% unter dem Anteil an erstem Lösungsmittel zu Ende der Chromatographie liegt, bezogen auf die Lösungsmittelzusammensetzung. Demgemäß steigt vorzugsweise der Anteil an Lösungsmittel, welches bei Normalbedingungen flüssig ist, an, während der Anteil an Lösungsmittel, welches bei Normalbedingungen gasförmig ist, abnimmt. Durch diese Ausgestaltung kann überraschend eine Verkrustung in einem Gasabscheider, welcher in einer bevorzugten Ausgestaltung des Verfahrens eingesetzt wird, minimiert, vorzugsweise vollständig verhindert werden. Hierdurch kann die Trennqualität der Anlage beziehungsweise des Verfahrens überraschend verbessert werden.

Ferner kann vorgesehen sein, dass der Anteil an erstem Lösungsmittel im Bereich von 5 bis 95 Vol.-% und der Anteil an zweitem Lösungsmittel im Bereich von 5 bis 95 Vol.-% liegt, bezogen auf die Lösungsmittelzusammensetzung.

Bevorzugt kann vorgesehen sein, dass die Chromatographie bei einem Druck im Bereich von 50 bis 500 bar, vorzugsweise 75 bis 400 bar durchgeführt wird.

**In** einer bevorzugten Ausführungsform kann vorgesehen sein, dass die Chromatographie bei einer Temperatur im Bereich von 20°C bis 80°C, vorzugsweise 35°C bis 60°C durchgeführt wird.

**In** einer bevorzugten Ausführungsform kann vorgesehen sein, dass das zweite Lösungsmittel, welches in der Zusammensetzung nach der Chromatographiesäule enthalten ist, vor dem Einleiten in den Fraktionssammler zumindest teilweise abgetrennt wird. Hierdurch kann überraschend eine wesentliche Verbesserung der Wirtschaftlichkeit erzielt werden, da ein Teil des Lösungsmittels vor dem Fraktionssammler abgetrennt und hierdurch bei gleichem Volumen der Sammelgefäße seltener ein Wechsel der Sammelgefäße vorgenommen werden muss.

Vorzugsweise kann vorgesehen sein, dass das steuerbare Auslassventil, das nach dem Flüssigauslass des Gas-Flüssig-Abscheiders angeordnet ist, in Abhängigkeit des Flüssigkeitsstandes im Trennbereich des Gas-Flüssig-Abscheiders gesteuert wird.

Der Gas-Flüssig-Abscheider kann vorzugsweise bei Druck betrieben werden, der im Bereich des Drucks liegt, der im Bereich der Gasrückgewinnungsvorrichtung herrscht. Besonders bevorzugt ist der Gasdruck im Gas-Flüssig-Abscheider im Wesentlichen gleich dem Druck der im Bereich der Gasrückgewinnungsvorrichtung.

Vorzugsweise kann vorgesehen sein, dass der Druck im Bereich des Gas-Flüssig-Abscheiders im Bereich von 20 bis 60 bar, vorzugsweise im Bereich von 26 bis 50 bar und besonders bevorzugt im Bereich von 30 bis 40 bar liegt.

Vorzugsweise kann vorgesehen sein, dass der Druck im Bereich der Gasrückgewinnungsvorrichtung im Bereich von 20 bis 60 bar, vorzugsweise im Bereich von 26 bis 50 bar und besonders bevorzugt im Bereich von 30 bis 40 bar liegt. Dieser Druck bezieht sich vorzugsweise auf den Druck im Bereich des Druckbehälters, der vorzugsweise in der Gasrückgewinnungsvorrichtung vorgesehen sein kann.

Der Druck im Bereich des Gas-Flüssig-Abscheiders und somit auch der Gasrückgewinnungsvorrichtung kann unter anderem durch einen dritten Rückdruckregler gesteuert werden, der in Flussrichtung gesehen nach dem Gasauslass des Gas-Flüssig-Abscheiders und vor der Gasrückgewinnungsvorrichtung angeordnet ist, oder durch den Druck, der über das Flüssigkeitsreservoir für ein zweites Fluid bereitgestellt wird.

Das nach dem Flüssigauslass des Gas-Flüssig-Abscheiders vorgesehene steuerbare Auslassventil verhindert, dass größere Mengen an zweitem Fluid, vorzugsweise CO₂ über den Flüssigauslass des Gas-Flüssig-Abscheiders aus der Anlage entweichen können. Größere Mengen bedeuten hier insbesondere, dass der Druck im Gas-Flüssig-Abscheider entsprechend hoch eingestellt werden kann. Hierbei sind kleinere Mengen an zweitem Fluid, beispielsweise CO₂, die im ersten Fluid, beispielsweise Methanol, gelöst vorliegen und so über das steuerbare Auslassventil aus dem Gas-Flüssig-Abscheider entweichen können, unbedeutend.

In einer bevorzugten Ausgestaltung kann daher vorgesehen sein, dass das steuerbare Auslassventil, das in Flussrichtung gesehen nach dem Flüssigauslass des Gas-Flüssig-Abscheiders angeordnet ist, vorzugsweise über einen Sensor gesteuert wird, der zur Bestimmung des Flüssigkeitsstandes im Gas-Flüssig-Abscheider dient. Alternativ kann das steuerbare Auslassventil, das in Flussrichtung gesehen nach dem Flüssigauslass des Gas-Flüssig-Abscheiders angeordnet ist, über einen Sensor gesteuert werden, der nach dem Flüssigauslass des Gas-Flüssig-Abscheiders vorgesehen ist. Hierzu sind beispielsweise Blasenzähler oder Sensoren zur Bestimmung des Brechungsindex geeignet, die vor oder nach dem steuerbaren Auslassventil angeordnet sind, vorzugsweise vor dem steuerbaren Auslassventil. Diese Sensoren bestimmen den Gasanteil in der Leitung, in welcher das steuerbare Auslassventil vorgesehen ist.

Ist der Flüssigkeitsstand zu gering oder die Blasenzahl zu hoch, kann vorgesehen sein, dass das steuerbare Auslassventil geschlossen wird, im Falle eines Rückdruckreglers dieser auf einen höheren Rückdruck geregelt wird.

Des Weiteren kann bevorzugt vorgesehen sein, dass der Druck im Bereich der Gasrückgewinnungsvorrichtung, beispielsweise in einem Druckbehälter, unter anderem in einem bevorzugt einzusetzenden Rektifikationskolonnenkörper oder einem Kondensator gemessen und basierend auf diesen Messwerten das steuerbare Auslassventil geschlossen oder geöffnet, im Falle eines Rückdruckreglers dieser auf einen höheren oder niedrigeren Rückdruck geregelt wird. Ist der Flüssigkeitsstand im Gas-Flüssig-Abscheider niedrig, befindet sich Gas im Bereich des Flüssigauslasses des Gas-Flüssig-Abscheiders oder ist der Druck im Bereich der Gasrückgewinnungsvorrichtung, beispielsweise in einem Druckbehälter zu gering, so wird das steuerbare Auslassventil geschlossen, im Falle eines Rückdruckreglers dieser auf einen höheren Rückdruck geregelt. Gleiches gilt falls der Druck im Bereich der Gasrückgewinnungsvorrichtung, beispielsweise in einem Druckbehälter, unter anderem in einem bevorzugt einzusetzenden Rektifikationskolonnenkörper oder einem Kondensator zu gering ist. Ist der Druck im Bereich der Gasrückgewinnungsvorrichtung, beispielsweise in einem Druckbehälter, unter anderem in einem bevorzugt einzusetzenden Rektifikationskolonnenkörper oder einem Kondensator jedoch hoch, beispielsweise im Bereich des vorgesehenen Betriebsdrucks, so wird das steuerbare Auslassventil geöffnet, beziehungsweise der Rückdruckregler auf einen niedrigeren Rückdruck geregelt. Hierdurch kann auch ein Sensor eingesetzt werden, beispielsweise ein Blasenzähler oder ein Sensor zur Bestimmung des Brechungsindex, der nach dem zweiten Rückdruckventil angeordnet ist.

Der Druck des Fluids, der durch das Flüssigkeitsreservoir für ein zweites Fluid bereitgestellt wird, kann üblich durch ein Ventil gesteuert werden. Dieser Druck bestimmt im Wesentlichen den Druck im Bereich der Gasrückgewinnungsvorrichtung, falls keine Pumpe im Bereich der Gasrückgewinnungsvorrichtung beziehungsweise zwischen einem Druckbehälter, vorzugsweise einem Rektifikationskolonnenkörper beziehungsweise einem Kondensator und dem zweiten Verbindungsstück vorgesehen ist. In diesem Fall baut sich aufgrund der Abdichtung durch das nach dem Flüssigauslass des Gas-Flüssig-Abscheiders vorgesehene steuerbare Auslassventil im Bereich der Gasrückgewinnungsvorrichtung ein entsprechender Druck auf. Ein in einer bevorzugten Ausgestaltung vorgesehenes Rückschlagventil verhindert hierbei, dass Fluid aus dem Flüssigkeitsreservoir für ein zweites Fluid in den Gas-Flüssig-Abscheider gedrückt wird.

In einer alternativen Ausführungsform kann die Gasrückgewinnungsvorrichtung eine Pumpe aufweisen, die den Druck des zurückgewonnenen zweiten Fluids auf einen Druck erhöht, der dem Druck entspricht, mit dem das zweite Fluid aus dem Flüssigkeitsreservoir für ein zweites Fluid entnommen wird. Hierdurch kann der Druck im Bereich der Gasrückgewinnungsvorrichtung geringer gehalten werden als der Druck mit dem das zweite Fluid aus dem zweiten Flüssigkeitsreservoir entnommen wird.

Hierbei kann der Druck im Gas-Flüssig-Abscheider über einen dritten Rückdruckregler gesteuert werden, der in Flussrichtung gesehen nach dem Gasauslass des Gas-Flüssig-Abscheiders und vor der Gasrückgewinnungsvorrichtung angeordnet ist. In dieser Ausgestaltung ist vorzugsweise eine Pumpe im Bereich der Gasrückgewinnungsvorrichtung beziehungsweise zwischen einem Druckbehälter, vorzugsweise einem Rektifikationskolonnenkörper beziehungsweise einem Kondensator, und dem Flüssigkeitsreservoir für ein zweites Fluid oder einem zweiten Verbindungsstück vorgesehen. Die hier vorgesehene Pumpe kann demgemäß rückgewonnenes zweites Fluid in das Flüssigkeitsreservoir für ein zweites Fluid oder, falls ein zweites Verbindungsstück vorgesehen ist, in die Zuführungsleitung der zweiten Pumpe überführen.

Ferner kann der Druck im Gas-Flüssig-Abscheider dadurch gesteuert werden, dass eine Pumpe im Bereich der Gasrückgewinnungsvorrichtung beziehungsweise zwischen einem Druckbehälter, vorzugsweise einem Rektifikationskolonnenkörper beziehungsweise einem Kondensator, und dem Flüssigkeitsreservoir für ein zweites Fluid oder einem zweiten Verbindungsstück vorgesehen ist. Hierbei wird vorzugsweise der Druck in einem Druckbehälter, beispielsweise einem Kondensator gemessen und die Temperatur im Druckbehälter so gewählt, dass der Druck innerhalb eines vorgegebenen Bereichs liegt, wobei ein Teil des zweiten Fluids in flüssiger Phase vorliegt. Der Druck im Gas-Flüssig-Abscheider entspricht im Wesentlichen dem Druck in diesem Druckbehälter, beispielsweise diesem Kondensator. Besonders bevorzugt wird das zweite Fluid hierbei von der Pumpe in flüssiger Phase vom Druckbehälter, beispielsweise vom Kondensator in das Flüssigkeitsreservoir für ein zweites Fluid oder, falls ein zweites Verbindungsstück vorgesehen ist, in die Zuführungsleitung der zweiten Pumpe überführt, wobei in der hierfür vorgesehenen Leitung weitere Komponenten, beispielsweise ein Rückschlagventil vorgesehen sein können. Die Pumpe wird hierbei vorzugsweise so gesteuert, dass im Druckbehälter, beispielsweise im Kondensator immer eine flüssige Phase vorliegt. Hierzu kann der Flüssigkeitsstand innerhalb des Druckbehälters, beispielsweise des Kondensators gemessen und sichergestellt werden, dass dieser nicht unter einen vorgegebenen Minimalwert fällt.

Ausführungen mit einer Pumpe im Bereich der Gasrückgewinnungsvorrichtung zeichnen sich insbesondere durch eine besonders hohe Effizienz aus, die dadurch gegeben ist, dass diese Pumpe im Bereich der Gasrückgewinnungsvorrichtung flüssiges zweites Fluid pumpen kann und bei der Entnahme von zweitem Fluid aus dem Flüssigkeitsreservoir für ein zweites Fluid keine Temperierung erfolgen muss.

Ausführungen ohne eine Pumpe im Bereich der Gasrückgewinnungsvorrichtung sind wartungsärmer und kostengünstiger, da auf eine Pumpe und im Allgemeinen einen zweiten Druckbehälter verzichtet werden kann.

Ferner kann vorgesehen sein, dass die Temperatur im Bereich der Gasrückgewinnungsvorrichtung im Bereich von -30 bis 20 °C, vorzugsweise im Bereich von -20 bis 10 °C und besonders bevorzugt im Bereich von -10 bis 0 °C liegt.

Vorzugsweise kann vorgesehen sein, dass die Fraktionierung bei einem geringeren Druck betrieben wird als der Gas-Flüssig-Abscheider, wobei vorzugsweise der Druckunterschied im Bereich von 0,1 bis 60 bar, vorzugsweise 0,5 bis 50 bar und besonders bevorzugt 1 bis 40 bar liegt. Dieser Druck kann vorzugsweise über das steuerbare Auslassventil, das nach dem Flüssigauslass des Gas-Flüssig-Abscheider ein angeordnet ist, eingestellt werden. Da der Druck im Gas-Flüssig-Abscheider relativ hoch ist, wobei die bevorzugten Werte zuvor und nachfolgend dargelegt sind, kann die Fraktionierung demgemäß bei einem Überdruck erfolgen, so dass die zuvor dargelegten unteren Wertgrenzen eingehalten werden.

Bevorzugt wird die Fraktionierung bei einem Druck im Bereich von 0 bis 1 bar durchgeführt (Überdruck), besonders bevorzugt 0 bis 0,5 bar, speziell bevorzugt 0 bis 0,2 bar. Die zuvor dargelegten Druckwerte beziehen sich auf Überdruck, wobei dieser Druck, der relativ zum Atmosphärendruck bzw. Luftdruck gemessen wird.

Die Detektion einer zu sammelnden Fraktion kann auf übliche Weise festgelegt werden, die im Allgemeinen auch bei verwandten Chromatographieverfahren eingesetzt werden. Hierzu gehört beispielsweise, dass eine Fraktion bei einer bestimmten Signalhöhe des Detektors, beispielsweise eines UV/VIS-Detektors gesammelt wird. Ferner kann eine Fraktion auch aufgrund einer bestimmten Form des Signals gesammelt werden, beispielsweise der vorgegebenen Änderung der Steigung des Detektorsignals oder einem bestimmten Wert der Steigung des Detektorsignals.

Ferner kann vorgesehen sein, dass die Chromatographie bei einer Flussrate im Bereich von 10 ml/min bis 450 ml/min, besonders bevorzugt im Bereich von 50 ml/min bis 300 ml/min und speziell bevorzugt 100 ml/min bis 250 ml/min durchgeführt wird. Diese Flussrate stellt die Gesamtflussrate dar. Die Flussrate der einzelnen Lösungsmittel, insbesondere des ersten beziehungsweise des zweiten Lösungsmittels, welche jeweils als Gemisch eingesetzt werden, ergibt sich aus dem jeweiligen Volumenanteil.

Ferner kann vorgesehen sein, dass der Fraktionssammler über eine Steuerungseinheit gesteuert wird und die Steuerungseinheit mit dem Detektor in Wirkverbindung steht, wobei bei Detektion einer Substanz durch den Detektor ein Steuerimpuls an den Fraktionssammler geleitet wird, der einen Wechsel des Sammelgefäßes bewirkt.

In einer weiteren Ausführungsform kann vorgesehen sein, dass der Fraktionssammler über eine Steuerungseinheit gesteuert wird und die Steuerungseinheit mit dem Detektor in Wirkverbindung steht, wobei nach Beendigung der Detektion einer Substanz durch den Detektor ein Steuerimpuls an den Fraktionssammler geleitet wird, der einen Wechsel des Sammelgefäßes bewirkt. Diese Ausgestaltung ist gegenüber der Ausführungsform, bei der zu Beginn ein Wechsel des Sammelgefäßes bewirkt wird, bevorzugt.

Das Gas, welches über den Gas-Flüssig-Abscheider abgetrennt wird, kann über die zuvor näher beschriebene Gasrückgewinnungsvorrichtung recycelt werden.

Vorzugsweise kann vorgesehen sein, dass der Druck im bevorzugt vorgesehenen temperierbaren, besonders bevorzugt kühlbaren Druckbehälter im Bereich von 20 bis 60 bar, vorzugsweise im Bereich von 26 bis 50 bar und besonders bevorzugt im Bereich von 30 bis 40 bar liegt.

**In** einer bevorzugten Ausführungsform der vorliegenden Erfindung, bei der zumindest ein Teil der Pumpenzuführleitung in Flussrichtung gesehen nach dem zweiten Verbindungsstück kühlbar ausgestaltet ist, kann vorgesehen sein, dass die Temperatur im kühlbar ausgestaltet Teil der Pumpenzuführleitung geringer ist als die Temperatur im Druckbehälter der Gasrückgewinnungsvorrichtung.

Vorzugsweise kann hierbei vorgesehen sein, dass die Temperatur im Druckbehälter 1 bis 15 °C höher ist als im kühlbar ausgestaltet Teil der Pumpenzuführleitung, vorzugsweise 2 bis 10°C und besonders bevorzugt 3 bis 5°C.

Falls die Gasrückgewinnungsvorrichtung zwei oder mehr Druckbehälter aufweist, beziehen sich diese Angaben auf die Temperatur des Druckbehälters, der die höchste Temperatur aufweist. Falls ein Temperaturgradient in einem Druckbehälter vorhanden ist, beziehen sich diese Angaben auf die höchste Temperatur innerhalb des Druckbehälters.

Ferner kann in einer bevorzugten Ausführungsform, bei der die Gasrückgewinnungsvorrichtung einen ersten Druckbehälter und einen zweiten Druckbehälter aufweist, wobei der erste und der zweite Druckbehälter kühlbar ausgestaltet sind, und wobei der erste Druckbehälter in Flussrichtung gesehen vor dem zweiten Druckbehälter angeordnet ist, vorgesehen sein, dass die Temperatur im ersten Druckbehälter höher ist als im zweiten Druckbehälter.

Weiterhin kann in einer bevorzugten Ausführungsform, bei der die Gasrückgewinnungsvorrichtung einen ersten Druckbehälter und einen zweiten Druckbehälter aufweist, wobei der erste Druckbehälter temperierbar und der zweite Druckbehälter kühlbar ausgestaltet ist, und wobei der erste Druckbehälter in Flussrichtung gesehen vor dem zweiten Druckbehälter angeordnet ist, vorgesehen sein, dass die Temperatur im ersten Druckbehälter höher ist als im zweiten Druckbehälter.

Vorzugsweise kann hierbei vorgesehen sein, dass die Temperatur im ersten Druckbehälter 1 bis 15 °C höher ist als im zweiten Druckbehälter, vorzugsweise 2 bis 10°C und besonders bevorzugt 3 bis 5°C.

Einsprechende Werte gelten auch für die Ausgestaltung bei der die Abscheidevorrichtung für Lösungsmittel einen Rektifikationskolonnenkörper umfasst.

In einer bevorzugten Ausführungsform kann vorgesehen sein, dass die Gasrückgewinnungsvorrichtung einen ersten Druckbehälter und einen zweiten Druckbehälter aufweist, wobei der erste und der zweite Druckbehälter kühlbar ausgestaltet sind, und wobei zwischen dem ersten Druckbehälter und dem zweiten Druckbehälter eine Abscheidevorrichtung für Lösungsmittel vorgesehen ist, wobei die Abscheidevorrichtung für Lösungsmittel temperierbar ist, wobei die Temperatur der temperierbaren Abscheidevorrichtung in Abhängigkeit des Druckes so eingestellt wird, dass die Temperatur im Bereich von 0,1 °C bis 20 °C, vorzugsweise 0,5°C bis 10°C oberhalb des Verflüssigungsdruckes des zweiten Fluids liegt.

Ferner kann vorgesehen sein, dass die Temperatur im zweiten Druckbehälter im Bereich von -30 bis 20 °C, vorzugsweise im Bereich von -20 bis 10 °C und besonders bevorzugt im Bereich von -10 bis 0 °C liegt. Vorzugsweise kann vorgesehen sein, dass im zweiten Druckbehälter Temperatur- und Druckbedingungen eingestellt werden, unter denen das in den zweiten Druckbehälter überführte Fluid, vorzugsweise das CO₂ flüssig oder überkritisch vorliegt.

Besonders bevorzugt kann vorgesehen sein, dass das zweite Fluid zumindest teilweise in einem Kreislauf geführt wird.

Nachfolgend sollen bevorzugte Ausführungsformen der vorliegenden Erfindung anhand von vier Figuren beispielhaft beschrieben werden, ohne dass hierdurch eine Begrenzung der Erfindung erfolgen soll. Es zeigen:
- Figur 1: eine schematische Darstellung einer ersten Chromatographie-Anlage,
- Figur 2: eine schematische Darstellung einer zweiten Chromatographie-Anlage,
- Figur 3: eine schematische Darstellung einer dritten Chromatographie-Anlage,
- Figur 4: eine schematische Darstellung einer weiteren Chromatographie-Anlage,
- Figur 5: eine schematische Darstellung einer Gasrückgewinnungsvorrichtung zur Verwendung in einer Chromatographie-Anlage.

Figur 1 zeigt in schematischer Darstellung eine erste Chromatographie-Anlage 1, bei der eine Fluid-Rückgewinnung erfolgt.

Eine geeignete Chromatographie-Anlage 1 umfasst zwei Fluidströme, wobei ein erstes Fluid durch ein erstes Flüssigkeitsreservoir 3 und ein zweites Fluid durch ein zweites Flüssigkeitsreservoir 5 bereitgestellt wird. Die Nomenklatur erstes Flüssigkeitsreservoir beziehungsweise zweites Flüssigkeitsreservoir bezeichnet insbesondere in den Figuren, das in den Ansprüchen und der Beschreibung dargelegte Flüssigkeitsreservoir für ein erstes beziehungsweise zweites Fluid, wobei dies aus Gründen der Lesbarkeit erfolgt. Das erste Fluid wird vom Flüssigkeitsreservoir 3 durch eine Pumpe 7 in ein Verbindungsstück 13 überführt. In Flussrichtung gesehen ist vor dem Verbindungsstück 13 eine Zugabeeinheit 11 vorgesehen, wobei diese in der vorliegenden Ausführungsform nach der Pumpe 7 angeordnet ist. In einer weiteren Ausführungsform kann die Zugabeeinheit 11 auch vor der der Pumpe 7 oder nach dem Verbindungsstück 13 angeordnet sein.

Das zweite Fluid wird vom Flüssigkeitsreservoir 5 durch eine Pumpe 9 in das zuvor dargelegte Verbindungsstück 13 überführt, so dass nach dem Verbindungsstück 13 eine Zusammensetzung vorliegt, die durch einen in Flussrichtung gesehen nach dem Verbindungsstück 13 angeordneten Mischer 15 gemischt wird, falls der Mischer zugeschaltet ist. In einer bevorzugten Ausführungsform ist der Mischer über ein aus Gründen der Übersichtlichkeit nicht dargestelltes Mischerschaltventil schaltbar, so dass in einer ersten Position der Mischer 15 zuschaltbar ist und in einer zweiten Position der Mischer 15 überbrückbar ist.

In der vorliegenden Chromatographie-Anlage 1 ist nach dem Verbindungsstück 13 und dem Mischer 15 eine Chromatographiesäule 17 nachgeschaltet. Nach der Chromatographiesäule 17 ist vorliegend ein erster Rückdruckregler 19 vorgesehen.

Nach dem ersten Rückdruckregler 19 ist in Flussrichtung gesehen ein Gas-Flüssig-Abscheider 21 angeordnet, der einen Gasauslass und einen Flüssigauslass umfasst. Im Flüssigauslass des Gas-Flüssig-Abscheiders 21 ist ein steuerbares Auslassventil 23 vorgesehen, der mit einem Fraktionssammler 25 verbunden ist.

Der Fraktionssammler 25 kann über ein oder mehrere, vorliegend nicht dargestellte Steuerungseinheiten gesteuert werden, wobei diese Steuerungseinheiten in Wirkverbindung mit einem oder mehreren Detektoren stehen. Die Detektoren sind, in Flussrichtung gesehen zwischen Chromatographiesäule 17 und Fraktionssammler 25 geschaltet, vorzugsweise zwischen Chromatographiesäule 17 und erstem Rückdruckregler 19.

Das über den Gas-Flüssig-Abscheider 21 abgetrennte Gas wird in eine Gasrückgewinnungsvorrichtung 29 geleitet. Zwischen Gas-Flüssig-Abscheider 21 und Gasrückgewinnungsvorrichtung 29 ist vorliegend ein dritter Rückdruckregler 27 vorgesehen, der den Druck innerhalb des Gas-Flüssig-Abscheiders 21 steuert.

Die Gasrückgewinnungsvorrichtung 29 umfasst eine Abscheidevorrichtung für Lösungsmittel 31, in welche das Gas aus dem Gas-Flüssig-Abscheider 21 eingeleitet wird. Ein über die Abscheidevorrichtung 31 abgetrenntes Lösungsmittel (erstes Fluid) kann über einen Flüssigkeitsauslass 33 entnommen werden.

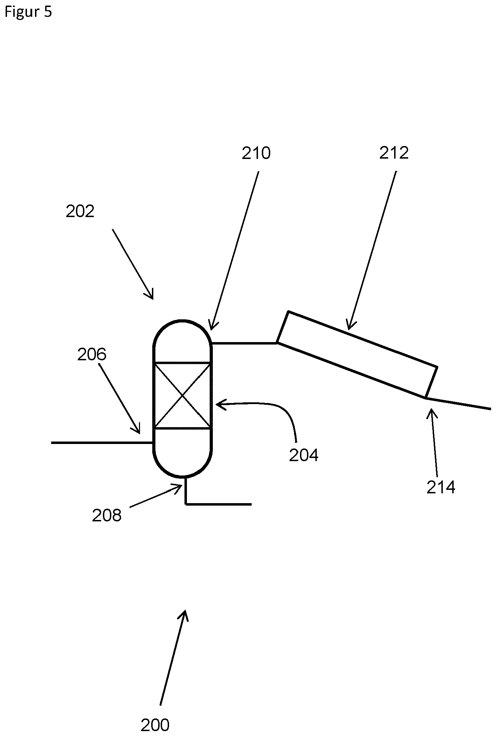

Die Abscheidevorrichtung für Lösungsmittel 31 kann vorzugsweise in Form eines Rektifikationskolonnenkörper ausgestaltet sein, wie dieser in Figur 5 näher beschrieben wird.

Nach der in der vorliegenden Ausgestaltung vorgesehenen Abscheidevorrichtung für Lösungsmittel 31 ist ein zweiter Druckbehälter 35 angeordnet, der vorzugsweise als Kondensator ausgestaltet ist, so dass zweites Fluid hier durch Abkühlung in eine flüssige Phase überführt wird. Der zweite Druckbehälter 35 kann mit einem Sicherheitsventil ausgestattet sein, um einen Überdruck zu verhindern. Die flüssige Phase wird nachfolgend in Flussrichtung gesehen durch eine Pumpe 37 in das Flüssigkeitsreservoir 5 für das zweite Fluid überführt. Die Pumpe 37 oder die Zu- oder Auslassleitung derselben weist vorzugsweise ein Rückschlagventil auf, welches ein Rückströmen von Fluid aus dem Flüssigkeitsreservoir 5 in den zweiten Druckbehälter beziehungsweise in den Gas Flüssig-Abscheider 21 verhindert.

Beim Betrieb wird in der vorliegend dargestellten Gasrückgewinnungsvorrichtung 29 das aus dem Gas-Flüssig-Abscheider 21 ausgeleitete Gas auf einen Druck und eine Temperatur gebracht, welches eine Verflüssigung des Gases und/oder Überführung in das zweite Flüssigkeitsreservoir 5 ermöglicht.

Die nachfolgenden Ausführungen beziehen sich insbesondere auf bevorzugt einzusetzendes CO₂. Bei Verwendung anderer Fluide sind die Parameter entsprechend anzupassen. Das CO₂-Gas wird im Gas-Flüssig-Abscheider 21 vorzugsweise auf einen Druck im Bereich von 20 bis 60 bar, vorzugsweise im Bereich von 26 bis 50 bar und besonders bevorzugt im Bereich von 30 bis 40 bar und in eine Abscheidevorrichtung für Lösungsmittel 31 eingeleitet. Dieser Druck kann über den nach dem Gasauslass angeordneten dritten Rückdruckregler 27 eingestellt werden.

Im Betrieb wird das CO₂-Gas in der Gasrückgewinnungsvorrichtung, vorzugsweise im zweiten Druckbehälter 35 kondensiert, wobei vorzugsweise Reste des ersten Fluids durch Unterschiede in der Kondensationstemperatur über die Abscheidevorrichtung für Lösungsmittel 31 abgetrennt werden.

Im Bereich der Gasrückgewinnungsvorrichtung 29 liegt die Temperatur vorzugsweise im Bereich von -30 bis 30 °C, bevorzugt im Bereich von -20 bis 25 °C und besonders bevorzugt im Bereich von -15 bis 20 °C. Hierbei kann die Temperatur in Flussrichtung gesehen abnehmen, um so Reste des ersten Fluids besser abzutrennen. Vorzugsweise ist die Abscheidevorrichtung 31 für Lösungsmittel temperierbar, wobei hier die Temperatur im Bereich von -5 bis 30, vorzugsweise 5 bis 25 und besonders bevorzugt 10 bis 20°C liegt. Im Bereich des zweiten Druckbehälters 35 liegt die Temperatur vorzugsweise im Bereich von -30 bis 10°C, vorzugsweise -20 bis 5°C und besonders bevorzugt -10°C bis 0°C.

In einer bevorzugten Ausgestaltung kann vorgesehen sein, dass der Druck im Bereich von 30 bis 40 bar liegt, wobei die Temperatur in der Abscheidevorrichtung 31 für Lösungsmittel so eingestellt wird, dass die Temperatur im Bereich von 0,1 °C bis 20 °C, vorzugsweise 0,5°C bis 10°C oberhalb des Verflüssigungsdruckes von CO₂ liegt. Weiterhin wird die Temperatur beziehungsweise der Druck so eingestellt, dass das verwendete Lösungsmittel flüssig bleibt und über die Abscheidevorrichtung 31 beziehungsweise den Flüssigkeitsauslass 33 entnommen werden kann.

In dieser Ausführungsform kann das zweite Fluid dem zweiten Flüssigkeitsreservoir 5 mit einem Druck im Bereich von 40 bis 80 bar, vorzugsweise 50 bis 70 bar entnommen werden. Die Pumpe 37 fördert das wiedergewonnene zweite Fluid bei etwa diesem Druck in das zweite Flüssigkeitsreservoir 5.

In einer bevorzugten Ausgestaltung ist des Weiteren die Pumpe 37 temperierbeziehungsweise kühlbar, so dass eine durch die Kompression entstehende Wärme leicht abgeführt werden kann.

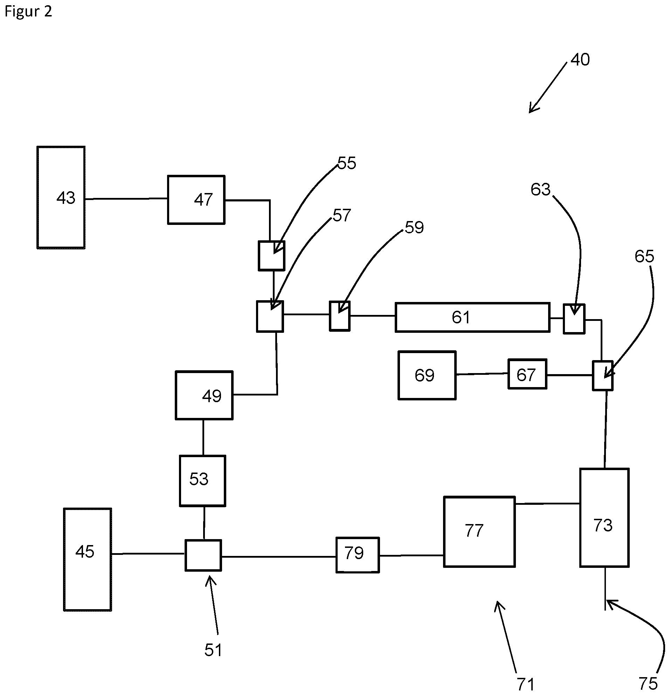

Figur 2 zeigt in schematischer Darstellung eine zweite Chromatographie-Anlage 40, bei der eine Fluid-Rückgewinnung erfolgt.

Eine geeignete Chromatographie-Anlage 40 umfasst zwei Fluidströme, wobei ein erstes Fluid durch ein erstes Flüssigkeitsreservoir 43 und ein zweites Fluid durch ein zweites Flüssigkeitsreservoir 45 bereitgestellt wird. Das erste Fluid wird vom Flüssigkeitsreservoir 43 durch eine Pumpe 47 in ein Verbindungsstück 57 überführt. In Flussrichtung gesehen ist vor dem Verbindungsstück 57 eine Zugabeeinheit 55 vorgesehen, wobei diese in der vorliegenden Ausführungsform nach der Pumpe 47 angeordnet ist. In einer weiteren Ausführungsform kann die Zugabeeinheit 55 auch vor der der Pumpe 47 oder nach dem Verbindungsstück 57 angeordnet sein.

Das zweite Fluid wird vom Flüssigkeitsreservoir 45 durch eine Pumpe 49 in das zuvor dargelegte Verbindungsstück 57 überführt. Hierbei wird das Fluid über ein später näher erläutertes zweites Verbindungsstück 51 und von diesem in einen Wärmetauscher 53 eingeleitet, welcher mit der Pumpe 49 in Verbindung steht.

Nach dem Verbindungsstück 57 vorliegt eine Zusammensetzung, die durch einen in Flussrichtung gesehen nach dem Verbindungsstück 57 angeordneten Mischer 59 gemischt wird, falls der Mischer zugeschaltet ist. In einer bevorzugten Ausführungsform ist der Mischer über ein aus Gründen der Übersichtlichkeit nicht dargestelltes Mischerschaltventil schaltbar, so dass in einer ersten Position der Mischer 59 zuschaltbar ist und in einer zweiten Position der Mischer 59 überbrückbar ist.

In der vorliegenden Chromatographie-Anlage 40 ist nach dem Verbindungsstück 57 und dem Mischer 59 eine Chromatographiesäule 61 nachgeschaltet. Nach der Chromatographiesäule 61 ist vorliegend ein erster Rückdruckregler 63 vorgesehen.

Nach dem ersten Rückdruckregler 63 ist in Flussrichtung gesehen ein Gas-Flüssig-Abscheider 65 angeordnet, der einen Gasauslass und einen Flüssigauslass umfasst. Im Flüssigauslass des Gas-Flüssig-Abscheiders 65 ist ein steuerbares Auslassventil 67 vorgesehen, der mit einem Fraktionssammler 69 verbunden ist.

Der Fraktionssammler 69 kann über ein oder mehrere, vorliegend nicht dargestellte Steuerungseinheiten gesteuert werden, wobei diese Steuerungseinheiten in Wirkverbindung mit einem oder mehreren Detektoren stehen. Die Detektoren sind, in Flussrichtung gesehen zwischen Chromatographiesäule 61 und Fraktionssammler 69 geschaltet.

Das über den Gas-Flüssig-Abscheider 65 abgetrennte Gas wird in eine Gasrückgewinnungsvorrichtung 71 geleitet. Die Gasrückgewinnungsvorrichtung 71 umfasst eine Abscheidevorrichtung für Lösungsmittel 73, wobei ein über die Abscheidevorrichtung 73 abgetrenntes Lösungsmittel über einen Flüssigkeitsauslass 75 entnommen werden kann, und einen zweiten Druckbehälter 77, in welchen das Gas aus dem Gas-Flüssig-Abscheider 65 beziehungsweise der Abscheidevorrichtung 73 eingeleitet wird.

Im Druckbehälter 77 wird das zweite Fluid kondensiert und von der Pumpe 79 in das zweites Verbindungsstück 51 beziehungsweise in einen Wärmetauscher 53 gepumpt. Der Druckbehälter 77 und/oder die Abscheidevorrichtung für Lösungsmittel 73 kann mit einem Sicherheitsventil ausgestattet sein, um einen Überdruck zu verhindern.

Beim Betrieb wird in der vorliegend dargestellten Gasrückgewinnungsvorrichtung 71 das aus dem Gas-Flüssig-Abscheider 65 ausgeleitete Gas auf einen Druck und eine Temperatur gebracht, welches eine Verflüssigung des Gases und/oder Überführung in den Wärmetauscher 53 beziehungsweise die Pumpe 49 ermöglicht.

Die nachfolgenden Ausführungen beziehen sich insbesondere auf bevorzugt einzusetzendes CO₂. Bei Verwendung anderer Fluide sind die Parameter entsprechend anzupassen. Das CO₂-Gas wird im Gas-Flüssig-Abscheider 65 vorzugsweise auf einen Druck im Bereich von 20 bis 60 bar, vorzugsweise im Bereich von 26 bis 50 bar und besonders bevorzugt im Bereich von 30 bis 40 bar und in die Abscheidevorrichtung für Lösungsmittel 73 beziehungsweise den Druckbehälter 77 eingeleitet.

Der Druck im Gas-Flüssig-Abscheider 65 wird hierbei durch die Temperatur im zweiten Druckbehälter 77 bestimmt, so dass diese Temperatur steuerbar, vorzugsweise regelbar ist. Die Temperatur kann vorzugsweise über einen Druckmesser geregelt werden, der zur Messung des Drucks im zweiten Druckbehälter vorgesehen sein kann, wobei dieser Druck auch an einer anderen Stelle bestimmt werden kann.

Im Betrieb wird das CO₂-Gas in der der Gasrückgewinnungsvorrichtung kondensiert, wobei vorzugsweise Reste des ersten Fluids durch Unterschiede in der Kondensationstemperatur über die Abscheidevorrichtung für Lösungsmittel 73 abgetrennt werden.

Im Bereich der Gasrückgewinnungsvorrichtung 71 liegt die Temperatur vorzugsweise im Bereich von -30 bis 30 °C, bevorzugt im Bereich von -20 bis 25 °C und besonders bevorzugt im Bereich von -15 bis 20 °C. Hierbei kann die Temperatur in Flussrichtung gesehen abnehmen, um so Reste des ersten Fluids besser abzutrennen. Vorzugsweise ist die Abscheidevorrichtung 73 für Lösungsmittel temperierbar, wobei hier die Temperatur im Bereich von -5 bis 30, vorzugsweise 5 bis 25 und besonders bevorzugt 10 bis 20°C liegt. Im Bereich des zweiten Druckbehälters 77 liegt die Temperatur vorzugsweise im Bereich von -30 bis 10°C, vorzugsweise -20 bis 5°C und besonders bevorzugt -10°C bis 0°C.

In einer bevorzugten Ausgestaltung kann vorgesehen sein, dass der Druck im Gas-Flüssig-Abscheider im Bereich von 30 bis 40 bar liegt, wobei die Temperatur in der Abscheidevorrichtung 77 für Lösungsmittel so eingestellt wird, dass die Temperatur im Bereich von 0,1 °C bis 20 °C, vorzugsweise 0,5°C bis 10°C oberhalb des Verflüssigungsdruckes von CO₂ liegt. Weiterhin wird die Temperatur beziehungsweise der Druck so eingestellt, dass das verwendete Lösungsmittel flüssig bleibt und über die Abscheidevorrichtung 77 beziehungsweise den Flüssigkeitsauslass 79 entnommen werden kann.

In dieser Ausführungsform kann das zweite Fluid dem zweiten Flüssigkeitsreservoir 45 mit einem Druck im Bereich von 40 bis 80 bar, vorzugsweise 50 bis 70 bar entnommen werden. Die Pumpe 79 fördert das wiedergewonnene zweite Fluid bei etwa diesem Druck in den Wärmetauscher 53 oder die Pumpe 49.

In einer bevorzugten Ausgestaltung ist des Weiteren die Pumpe 79 temperierbeziehungsweise kühlbar, so dass eine durch die Kompression entstehende Wärme leicht abgeführt werden kann.

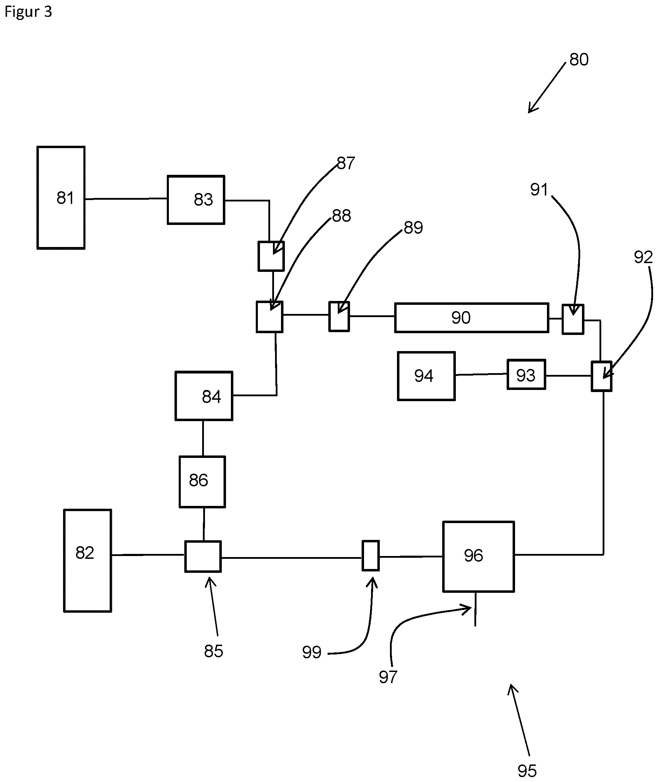

Figur 3 zeigt in schematischer Darstellung eine dritte Chromatographie-Anlage 80, bei der eine Fluid-Rückgewinnung erfolgt.

Eine geeignete Chromatographie-Anlage 80 umfasst zwei Fluidströme, wobei ein erstes Fluid durch ein erstes Flüssigkeitsreservoir 81 und ein zweites Fluid durch ein zweites Flüssigkeitsreservoir 82 bereitgestellt wird. Das erste Fluid wird vom Flüssigkeitsreservoir 81 durch eine Pumpe 83 in ein Verbindungsstück 88 überführt. In Flussrichtung gesehen ist vor dem Verbindungsstück 88 eine Zugabeeinheit 87 vorgesehen, wobei diese in der vorliegenden Ausführungsform nach der Pumpe 83 angeordnet ist. In einer weiteren Ausführungsform kann die Zugabeeinheit 87 auch vor der der Pumpe 83 oder nach dem Verbindungsstück 88 angeordnet sein.

Das zweite Fluid wird vom Flüssigkeitsreservoir 82 durch eine Pumpe 84 in das zuvor dargelegte Verbindungsstück 57 überführt. Hierbei wird das Fluid über ein später näher erläutertes zweites Verbindungsstück 85 und von diesem in einen Wärmetauscher 86 eingeleitet, welcher mit der Pumpe 84 in Verbindung steht.

Nach dem Verbindungsstück 88 vorliegt eine Zusammensetzung, die durch einen in Flussrichtung gesehen nach dem Verbindungsstück 88 angeordneten Mischer 89 gemischt wird.

In der vorliegenden Chromatographie-Anlage 80 ist nach dem Verbindungsstück 88 und dem Mischer 89 eine Chromatographiesäule 90 nachgeschaltet. Nach der Chromatographiesäule 90 ist vorliegend ein erster Rückdruckregler 91 vorgesehen.

Nach dem ersten Rückdruckregler 91 ist in Flussrichtung gesehen ein Gas-Flüssig-Abscheider 92 angeordnet, der einen Gasauslass und einen Flüssigauslass umfasst. Im Flüssigauslass des Gas-Flüssig-Abscheiders 93 ist ein steuerbares Auslassventil 67 vorgesehen, der mit einem Fraktionssammler 94 verbunden ist.

Das über den Gas-Flüssig-Abscheider 92 abgetrennte Gas wird in eine Gasrückgewinnungsvorrichtung 95 geleitet. Die Gasrückgewinnungsvorrichtung 95 umfasst einen Druckbehälter 96, in welchen das Gas aus dem Gas-Flüssig-Abscheider 92 eingeleitet wird. Der Druckbehälter 96 ist vorliegend als Rektifikationskolonnenkörper ausgestaltet, so dass Lösungsmittelreste über einen Flüssigkeitsauslass 97 entnommen werden können.

Das im Druckbehälter 96 abgekühlte zweite Fluid wird in das zweites Verbindungsstück 85 und von diesem in einen Wärmetauscher 86 eingeleitet. Der Kreislauf wird insbesondere durch die Pumpe 84 bewirkt, die das zweite Fluid aus dem Druckbehälter 96 absaugt. Zur Verhinderung einer Einleitung von Fluid aus dem zweites Flüssigkeitsreservoir 82 ist ein Rückschlagventil 99 in der Leitung zwischen dem Druckbehälter 96 und dem zweiten Verbindungsstück 85 vorgesehen.

Im Betrieb wird das CO₂-Gas in der der Gasrückgewinnungsvorrichtung 95 abgekühlt, wobei vorzugsweise Reste des ersten Fluids durch Unterschiede in der Kondensationstemperatur über den Druckbehälter 96 beziehungsweise über den Flüssigkeitsauslass 97 entnommen werden können.

Im Bereich der Gasrückgewinnungsvorrichtung 95 liegt die Temperatur vorzugsweise im Bereich von -5 bis 30, vorzugsweise 5 bis 25 und besonders bevorzugt 10 bis 20°C. Hierbei sollte das zweite Fluid im Wesentlichen gasförmig, jedoch knapp oberhalb der Kondensationstemperatur sein.

In einer bevorzugten Ausgestaltung kann vorgesehen sein, dass der Druck im Gas-Flüssig-Abscheider im Bereich von 30 bis 40 bar liegt, wobei die Temperatur im Druckbehälter 96 so eingestellt wird, dass die Temperatur im Bereich von 0,1 °C bis 20 °C, vorzugsweise 0,5°C bis 10°C oberhalb des Verflüssigungsdruckes von CO₂ liegt. Weiterhin wird die Temperatur beziehungsweise der Druck so eingestellt, dass das verwendete Lösungsmittel flüssig bleibt und über den Flüssigkeitsauslass 97 entnommen werden kann.

In dieser Ausführungsform kann das zweite Fluid dem zweiten Flüssigkeitsreservoir 82 mit einem Druck entnommen werden, der dem Druck im Bereich des Gas-Flüssig-Abscheiders 92 beziehungsweise im Bereich der Gasrückgewinnungsvorrichtung 95, vorzugsweise im Bereich von 30 bis 40 bar. Das Fluid aus dem zweiten Flüssigkeitsreservoir 82 entnommene oder aus der Gasrückgewinnungsvorrichtung 95 rückgeführte Fluid wir in Wärmetauscher 86 eingeleitet und hier auf eine Temperatur abgekühlt, bei welcher das zweite Fluid verflüssigt wird und mit der Pumpe 84 in das Verbindungsstück 88 und anschließend in die Chromatographieäule 90 gepumpt.

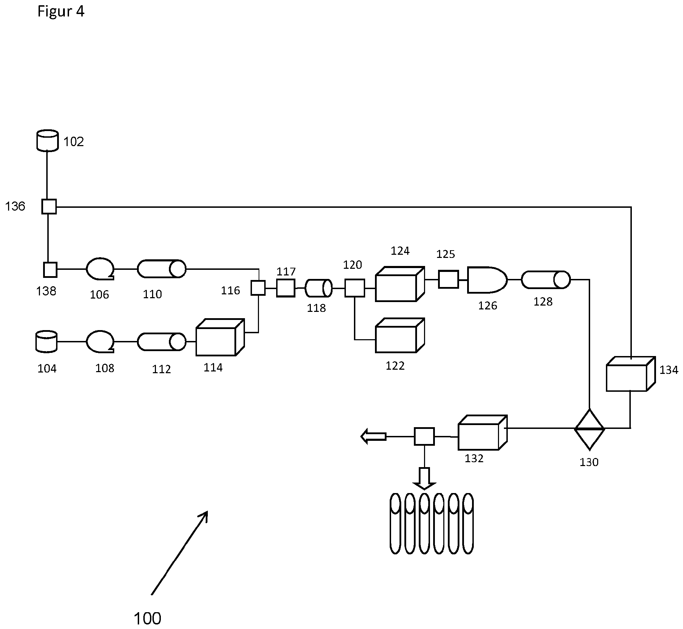

Figur4 zeigt in schematischer Darstellung eine weitere Chromatographie-Anlage 100.

Die in Figur 4 dargestellte Anlage zeigt insbesondere Einzelheiten, wie diese für eine bevorzugte Ausgestaltung einer SFC-Anlage zweckmäßig sind.

Ein solches System wird beispielhaft unter Verwendung von überkritischem CO₂ beschrieben, wobei Methanol als exemplarisches Lösungsmittel dargestellt wird. Selbstverständlich sind Systeme in denen andere Lösungsmittel, vorzugsweise organische Lösungsmittel eingesetzt werden, oder andere überkritische Fluide verwendet werden, ähnlich aufgebaut.

Wie in Fig. 4 gezeigt ist, werden die jeweiligen Fluide in Vorratsbehältern vorgehalten, insbesondere das weiterhin in einem überkritischen Zustand eingesetzte Gas in einem Speichertank 102 und das Lösungsmittel einem Speichertank 104 bereitgestellt, welche über jeweils über eine Pumpe 106, 108 aus den Speichertanks 102, 104 zu den weiteren Bestandteilen der Anlage gefördert werden können. In der vorliegend beschriebenen Anlage 100 ist vorzugsweise in jeder Fluidzuleitung eine Vorbereitungsstufe 110, 112 vorgesehen, über die die Flüssigkeiten temperiert werden können. Ferner kann eine Nivellierung der durch die Pumpen indizierten Druckschwankungen bereitgestellt werden. Demgemäß kann diese Vorbereitungsstufe beispielsweise als Wärmetauscher oder als Pumpe ausgebildet sein. In der Lösungsmittelleitung ist eine Zugabeeinheit 114 vorgesehen, beispielsweise ein Injektor, über den eine aufzutrennende Mischung in die Anlage 100 eingeleitet wird, bevor das CO₂ und das Lösungsmittel in ein Verbindungsstück 116 geleitet und einer Chromatographiesäule 118 zugeführt werden. Zwischen dem Verbindungsstück 116 und der Chromatographiesäule 118 ist ein Mischer 117 vorgesehen.

In der vorliegenden Anlage 100 sind der Chromatographiesäule 118 zwei Analyseeinheiten nachgeschaltet, wobei hierzu eine Probeausleiteinheit 120 mit einem Massenspektrometer 122 verbunden ist und nach der Probeausleiteinheit ein UV-Detektor 124 vorgesehen ist. Nach der Analyseeinheit ist vorliegend eine Einrichtung zur Bereitstellung eines Zusatzvolumens 125 dargelegt, welches insbesondere dazu dient, die Laufzeit der Flüssigkeit zu erhöhen, um Ergebnisse beispielsweise des Massenspektrometers 122 auswerten zu können. Der in der Leitung nach der Einrichtung zur Bereitstellung eines Zusatzvolumens 125 vorgesehene Rückdruckregler 126 hält den jeweiligen Druck aufrecht, der notwendig ist, dass das Fluid in einem überkritischen Zustand verbleibt. Nach dem Rückdruckregler 126 ist ein Wärmetauscher 128 vorgesehen, der ein Einfrieren des Aerosols beim Entspannungsvorgang verhindert. Nachfolgend wird das Aerosol in einen Gas-Flüssig-Abscheider 130 eingeleitet, wobei die Flüssigkeit in einen Fraktionssammler 132 eingeleitet und in diesem fraktioniert wird. Das in den fraktionierten Proben enthaltene Lösungsmittel kann aus den Proben entfernt werden.

Das aus dem Gas-Flüssig-Abscheider 130 ausgeleitete Gas wird in eine Gasrückgewinnungsvorrichtung 134 eingeleitet und dort aufbereitet, wobei die Gasrückgewinnungsvorrichtung 134 weitere Komponenten aufweisen kann, die aus Gründen der Übersichtlichkeit nicht explizit dargestellt sind. Nähere Ausführungen einer bevorzugten Gasrückgewinnungsvorrichtung 134 sind unter anderem in Figuren 1 und 2 dargestellt. Vorliegend ist die Gasrückgewinnungsvorrichtung 134 über ein zweites Verbindungsstück 136 und einen Wärmetauscher 138 mit der Pumpe 106 verbunden, so dass rückgewonnenes CO₂ innerhalb der Anlage weiterverwendet wird.

Figur 5 zeigt in schematischer Darstellung eine Gasrückgewinnungsvorrichtung 200 zur Verwendung in einer Chromatographie-Anlage. Die Gasrückgewinnungsvorrichtung 200 weist insbesondere eine Abscheidevorrichtung 202 für Lösungsmittel auf, die vorliegend als Rektifikationskolonnenkörper ausgebildet ist.

Der Rektifikationskolonnenkörper umfasst Einbauten 204, die die Trennleistung des Rektifikationskolonnenkörpers verbessern.

Das aus einem in Figur 5 nicht dargestellten Gas-Flüssig-Abscheider ausgeleitete Gas wird in den Rektifikationskolonnenkörper beziehungsweise die Abscheidevorrichtung 202 für Lösungsmittel unterhalb der Einbauten 204 eingeleitet, wobei Reste des ersten Fluids, vorzugsweise eines Lösungsmittels im Bodenbereich des Rektifikationskolonnenkörper angesammelt und über eine Ausleitung 208 der Abscheidevorrichtung 202 für Lösungsmittel entnommen werden. Das zweite Fluid wird vorzugsweise gasförmig in einen Kondensator 212 eingeleitet und kondensiert und in flüssiger Phase über den Auslass 214 weiteren Komponenten der Chromatographie-Anlage zugeführt, beispielsweise einem zweiten Verbindungsstück, einem zweiten Flüssigkeitsreservoir oder einer Pumpe, wie diese in den zuvor dargelegten Figuren 1 bis 4 beschrieben sind.

Aus Gründen der Übersichtlichkeit wurden die Verbindungsleitungen zwischen den einzelnen Komponenten der zuvor dargelegten Anlagen oder Bauteile nicht mit Bezugszeichen versehen.

Die in der voranstehenden Beschreibung, sowie den Ansprüchen, Figuren und Ausführungsbeispielen offenbarten Merkmale der Erfindung können sowohl einzeln, als auch in jeder beliebigen Kombination für die Verwirklichung der Erfindung in ihren verschiedenen Ausführungsformen wesentlich sein. Beispielsweise kann eine Anlage gemäß Figur 2 ein drittes Rückschlagventil aufweisen, wie dies in Figur 1 beschrieben ist.

## Patentansprüche

1. Chromatographie-Anlage aufweisend eine erste Pumpe, die mit einem Flüssigkeitsreservoir für ein erstes Fluid verbindbar oder verbunden ist, und eine zweite Pumpe, die mit einem Flüssigkeitsreservoir für ein zweites Fluid verbindbar oder verbunden ist, wobei eine Pumpenauslassleitung der ersten Pumpe und eine Pumpenauslassleitung der zweiten Pumpe mit einem Verbindungsstück verbunden sind und in Flussrichtung gesehen nach diesem Verbindungsstück eine über eine Verbindungsleitung mit dem Verbindungsstück verbundene Chromatographiesäule, nachfolgend ein erster Rückdruckregler und anschließend ein Gas-Flüssig-Abscheider vorgesehen ist, wobei der Gas-Flüssig-Abscheider einen Flüssigauslass und einen Gasauslass aufweist, wobei der Gasauslass des Gas-Flüssig-Abscheiders mit einer Gasrückgewinnungsvorrichtung verbunden ist,
**dadurch gekennzeichnet, dass**
der Gas-Flüssig-Abscheider:
a) einen Abscheidebereich mit einer Einlassdüse, einer Pralleinheit und einer Gasleiteinheit;
b) einen Trennbereich mit einem Flüssigauslass und
c) einen Gasausleitbereich mit einem Gasauslass;
umfasst, wobei der Abscheidebereich mit dem Trennbereich über eine Abscheideöffnung verbunden ist und die Einlassdüse so ausgestaltet ist, dass ein durch die Einlassdüse geleiteter Gas-Flüssigstrom gegen die Pralleinheit beaufschlagbar ist und
nach dem Flüssigauslass des Gas-Flüssig-Abscheider ein steuerbares Auslassventil angeordnet ist, wobei eine Verbindungsleitung zwischen Gas-Flüssig-Abscheider und dem steuerbaren Auslassventil vorgesehen ist.

2. Chromatographie-Anlage gemäß Anspruch 1, **dadurch gekennzeichnet, dass** die Gasrückgewinnungsvorrichtung mindestens einen Druckbehälter umfasst, der temperierbar ist.

3. Chromatographie-Anlage gemäß Anspruch 1 oder 2, **dadurch gekennzeichnet, dass** der Gas-Flüssig-Abscheider einen Sensor zur Bestimmung des Flüssigkeitsstandes im Trennbereich aufweist und/oder ein Sensor zur Bestimmung des Flüssigkeitsgehaltes in der Verbindungsleitung zwischen Gas-Flüssig-Abscheider und dem steuerbaren Auslassventil vorgesehen ist.

4. Chromatographie-Anlage gemäß mindestens einem der vorhergehenden Ansprüche 2 oder 3, **dadurch gekennzeichnet, dass** der Druckbehälter in Fließverbindung mit dem Flüssigkeitsreservoir für ein zweites Fluid verbindbar oder verbunden ist oder der Druckbehälter in Fließverbindung mit der zweiten Pumpe verbindbar oder verbunden ist.

5. Chromatographie-Anlage gemäß Anspruch 4, **dadurch gekennzeichnet, dass** das Flüssigkeitsreservoir für ein zweites Fluid eine Flüssigkeitsauslassleitung aufweist und der Druckbehälter mit einer Druckbehälter-Auslassleitung verbunden ist, wobei die Flüssigkeitsauslassleitung des Flüssigkeitsreservoirs für ein zweites Fluid und die Druckbehälter-Auslassleitung in ein zweites Verbindungsstück zusammengeführt werden und aus diesem zweiten Verbindungsstück in eine gemeinsame Pumpenzuführleitung ausgeleitet werden, wobei die gemeinsame Pumpenzuführleitung mit der zweiten Pumpe verbunden ist.

6. Chromatographie-Anlage gemäß Anspruch 5, **dadurch gekennzeichnet, dass** in der Druckbehälter-Auslassleitung in Flussrichtung gesehen vor dem zweiten Verbindungsstück ein Rückschlagventil vorgesehen ist.

7. Chromatographie-Anlage gemäß Anspruch 5 oder 6, **dadurch gekennzeichnet, dass** zumindest ein Teil der Pumpenzuführleitung in Flussrichtung gesehen nach dem zweiten Verbindungsstück kühlbar ausgestaltet ist.

8. Chromatographie-Anlage gemäß Anspruch 7, **dadurch gekennzeichnet, dass** in der Pumpenzuführleitung in Flussrichtung gesehen nach dem zweiten Verbindungsstück ein Wärmetauscher vorgesehen ist.

9. Chromatographie-Anlage gemäß mindestens einem der vorhergehenden Ansprüche, **dadurch gekennzeichnet, dass** die Gasrückgewinnungsvorrichtung eine Abscheidevorrichtung für Lösungsmittel aufweist.

10. Chromatographie-Anlage gemäß mindestens einem der vorhergehenden Ansprüche, **dadurch gekennzeichnet, dass** die Gasrückgewinnungsvorrichtung eine Abscheidevorrichtung für Lösungsmittel aufweist, wobei die Abscheidevorrichtung einen Rektifikationskolonnenkörper umfasst.

11. Chromatographie-Anlage gemäß mindestens einem der vorhergehenden Ansprüche, **dadurch gekennzeichnet, dass** die Gasrückgewinnungsvorrichtung einen als Abscheidevorrichtung für Lösungsmittel ausgestalteten ersten Druckbehälter und einen als Kondensator ausgestalteten zweiten Druckbehälter aufweist, wobei der erste Druckbehälter temperierbar und der zweite Druckbehälter kühlbar ausgestaltet ist.

12. Chromatographie-Anlage gemäß mindestens einem der vorhergehenden Ansprüche 5 bis 12, **dadurch gekennzeichnet, dass** die Gasrückgewinnungsvorrichtung Abscheidevorrichtung für Lösungsmittel umfasst und zwischen Abscheidevorrichtung für Lösungsmittel und zweitem Verbindungsstück eine Pumpe vorgesehen ist.

13. Verfahren zur Durchführung einer Chromatographie umfassend den Einsatz einer Chromatographie-Anlage gemäß mindestens einem der vorhergehenden Ansprüche 1 bis 12.

14. Verfahren gemäß Anspruch 13, **dadurch gekennzeichnet, dass** das steuerbare Auslassventil, das nach dem Flüssigauslass des Gas-Flüssig-Abscheider ein angeordnet ist, in Abhängigkeit des Flüssigkeitsstandes im Trennbereich des Gas-Flüssig-Abscheiders gesteuert wird.

15. Umwandlungskit zum Umbau eines Chromatographiesystems ohne Fluid-Recycling zu einer Chromatographie-Anlage gemäß mindestens einem der vorhergehenden Ansprüche 1 bis 18, **dadurch gekennzeichnet, dass** das Kit mindestens einen Druckbehälter und ein steuerbares Auslassventil aufweist.
